# EUROPEAN PATENT SPECIFICATION

(11) **EP 0 580 864 B1**
(45) Date of publication and mention of the grant of the patent: **25.11.1998**
(21) Application number: 92920899.9
(22) Date of filing: 30.09.1992
(51) Int. Cl.: G11B 7/00, G11B 7/013

(54) **DATA RECORDING MEDIUM, DATA RECORDING APPARATUS, DATA REPRODUCING APPARATUS AND DATA RECORDING/REPRODUCING APPARATUS**
DATENAUFZEICHNUNGSMEDIUM, DATENAUFZEICHNUNGSGERÄT, DATENWIEDERGABEGERÄT UND DATENAUFZEICHNUNGS/WIEDERGABEGERÄT
SUPPORT D'ENREGISTREMENT DE DONNEES, APPAREIL D'ENREGISTREMENT DE DONNEES, APPAREIL DE REPRODUCTION DE DONNEES ET APPAREIL D'ENREGISTREMENT/REPRODUCTION DE DONNEES

(30) Priority: 14.02.1992 JP 59710/92; 10.07.1992 JP 207074/92
(43) Date of publication of application: 02.02.1994
(73) Proprietor: SONY CORPORATION, Tokyo 141 (JP)
(72) Inventor: KOBAYASHI, Seiji Sony Corporation, Shinagawa-ku Tokyo 141 (JP); OKAMURA, Hiroshige Sony Corporation, Shinagawa-ku Tokyo 141 (JP); YAMATSU, Hisayuki Sony Corporation, Shinagawa-ku Tokyo 141 (JP); KASHIWAGI, Toshiyuki Sony Corporation, Shinagawa-ku Tokyo 141 (JP)
(74) Representative: Melzer, Wolfgang, Dipl.-Ing.
(86) International application number: PCT/JP92/01250
(87) International publication number: WO 93/16467

(56) References cited:
- EP-A- 0 540 345
- JP-A- 1 185 839
- JP-A- 1 263 964
- JP-A-62 003 445
- JP-A-63 048 617
- JP-A-63 231 733
- JP-A-63 298 818
- JP-B- 3 066 735
- US-A- 4 873 680
- PATENT ABSTRACTS OF JAPAN vol. 17, no. 242 (P-1535) 14 May 1993 & JP-A-04 366 426 (SONY CORP) 18 December 1992

## Description

### TECHNICAL FIELD

The present invention relates to an information recording medium, an information recording apparatus, and an information reproducing apparatus.

### BACKGROUND ART

In conventional optical disks, a servo byte is cyclically provided at a predetermined position of each track and a clock pit for generating a reference clock and a wobble for tracking are formed in each servo byte interval. A reference clock (channel clock) is generated in response to the clock pit, and information is digitally recorded by a pit whose length is as integral multiple as the period of the reference clock.

In a compact disc, for example, although there exists no clock pit, information is also digitally recorded by a pit whose length (0.9 µm to 3.3 µm) is as integral multiple as the period of the reference clock (channel clock).

As described above, in the conventional optical disk and compact disc, the pit having the length integral multiple times as long as the period of the reference clock (channel clock) is formed and information is recorded in response to the length of the pit. There is then the problem that a recording density cannot be increased without difficulty.

When a 0.9 µm-long pit is recorded immediately after a 3.3 µm-long pit was recorded, then a disc (mater recording disc) is heated due to a so-called heat storage effect during the 3.3 µm-long pit is recorded so that the 0.9 µm-long pit is formed larger than expected. As a result, a signal is distorted and a read-out margin of the digital signal is reduced.

From US-A-4,873,680, an information recording medium as well as an information recording apparatus for recording digital information on such an information recording medium and an information reproducing apparatus for reproducing information from such an information recording medium are known, wherein the information recording medium has an information pit corresponding to digital information which is formed such that a position of an edge thereof is changed in a step-wise fashion from a predetermined reference position in response to said digital information.

### DISCLOSURE OF THE INVENTION

It is the object of the present invention to provide an information recording medium, an information recording apparatus and an information reproducing apparatus which allow an increased recording density.

According to the present invention, this object is achieved by an information recording medium according to claim 1, an information recording apparatus according to claim 7, and an information reproducing apparatus according to claim 9, respectively.

The dependent claims define advantageous and preferred embodiments of the present invention.

### BRIEF DESCRIPTION OF DRAWINGS

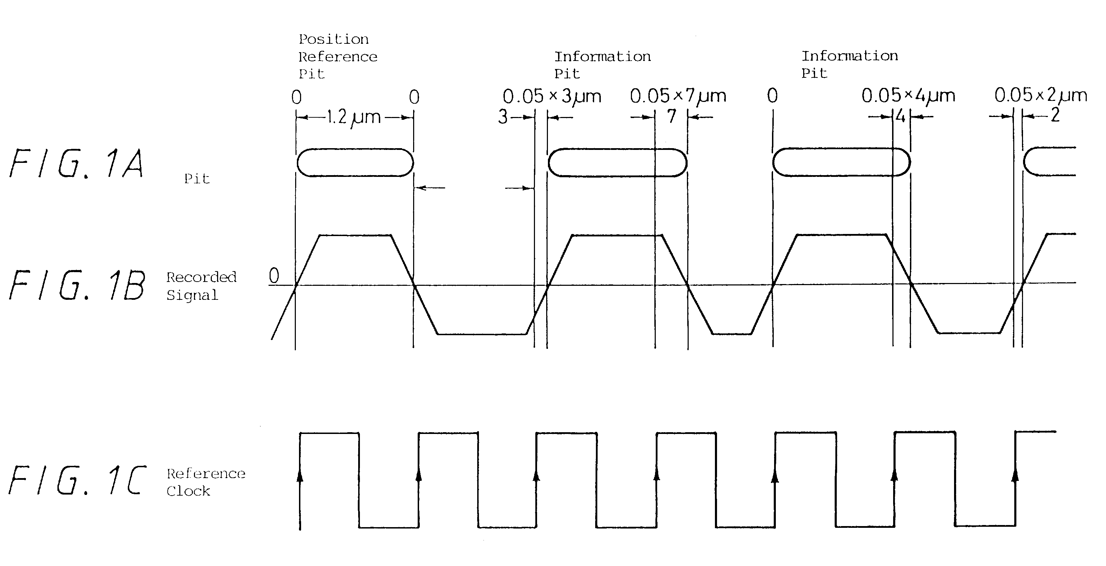

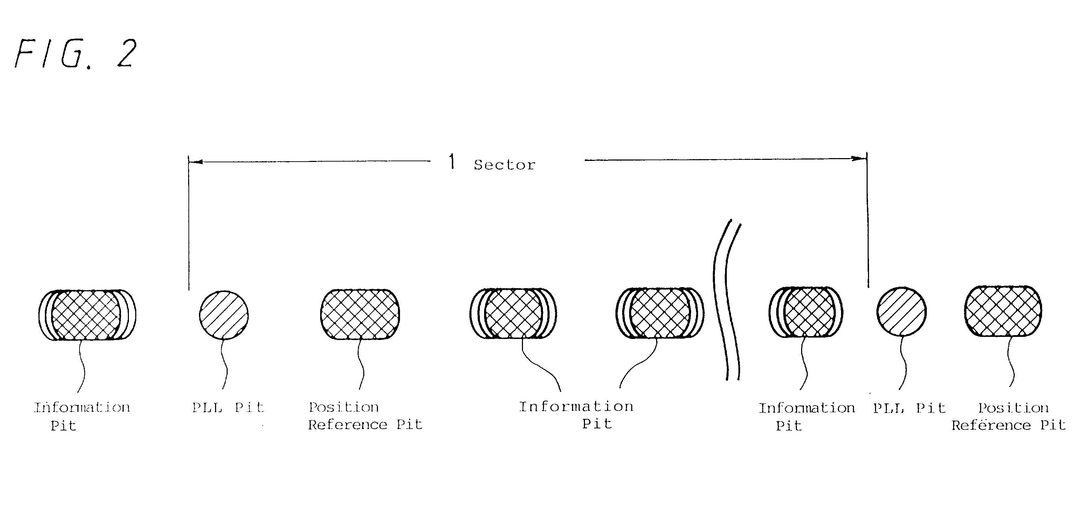

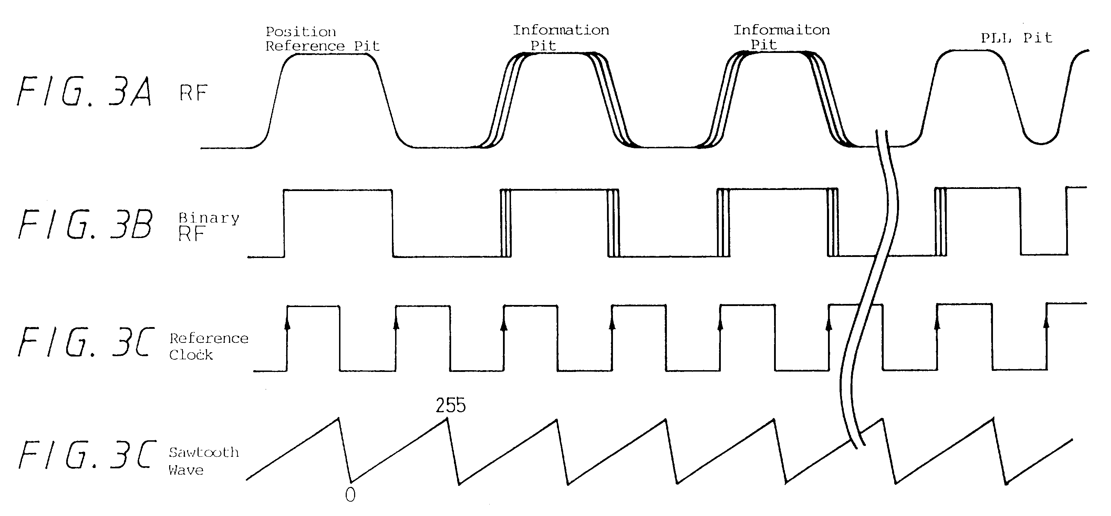

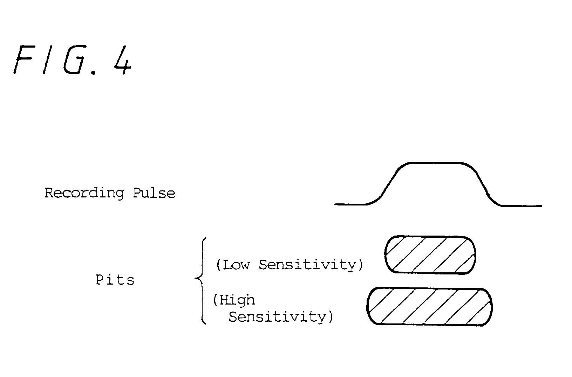

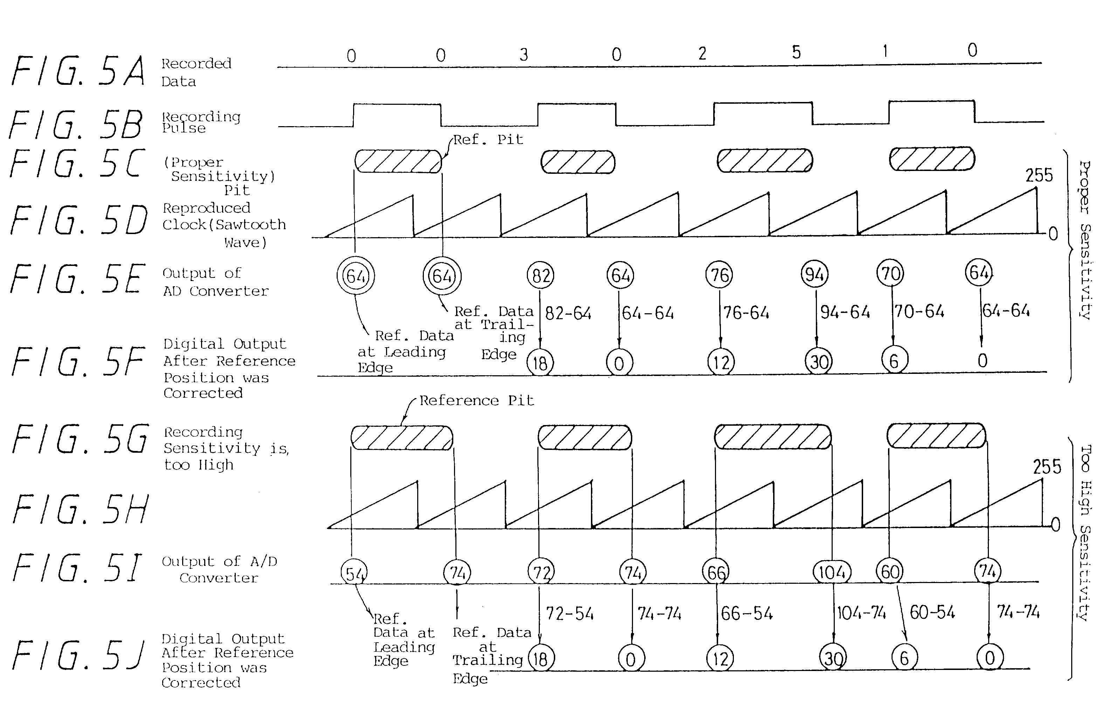

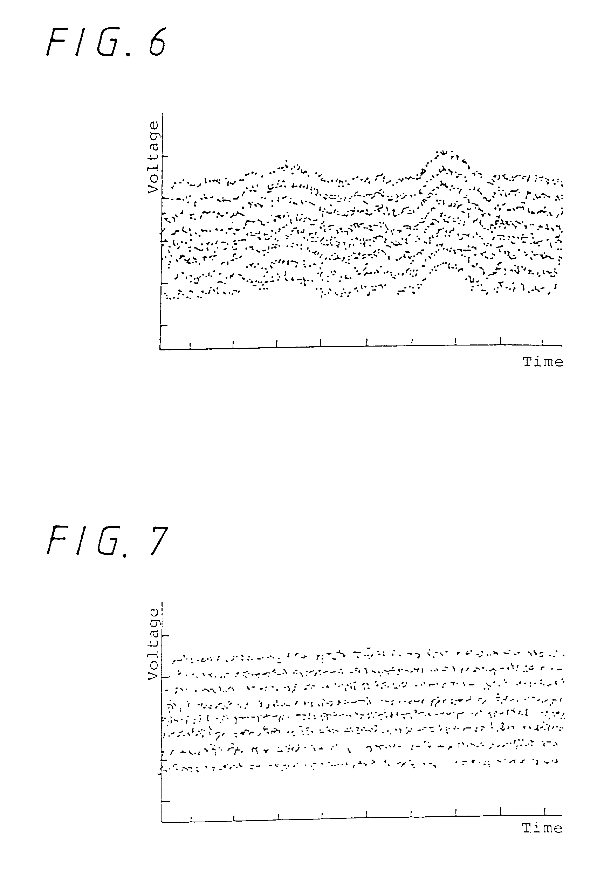

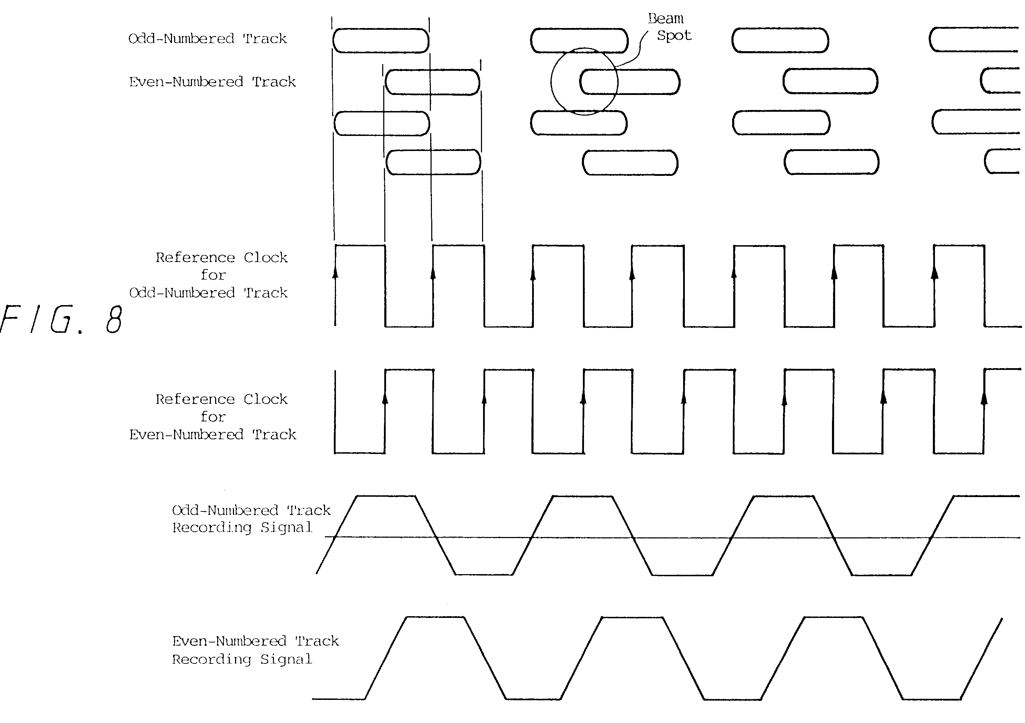

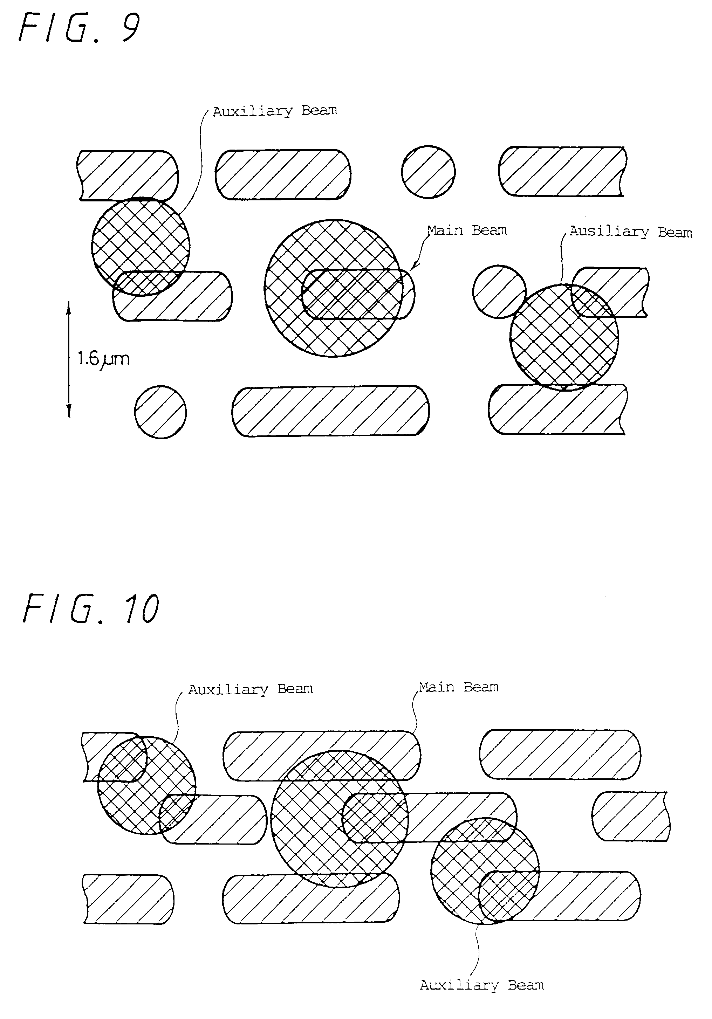

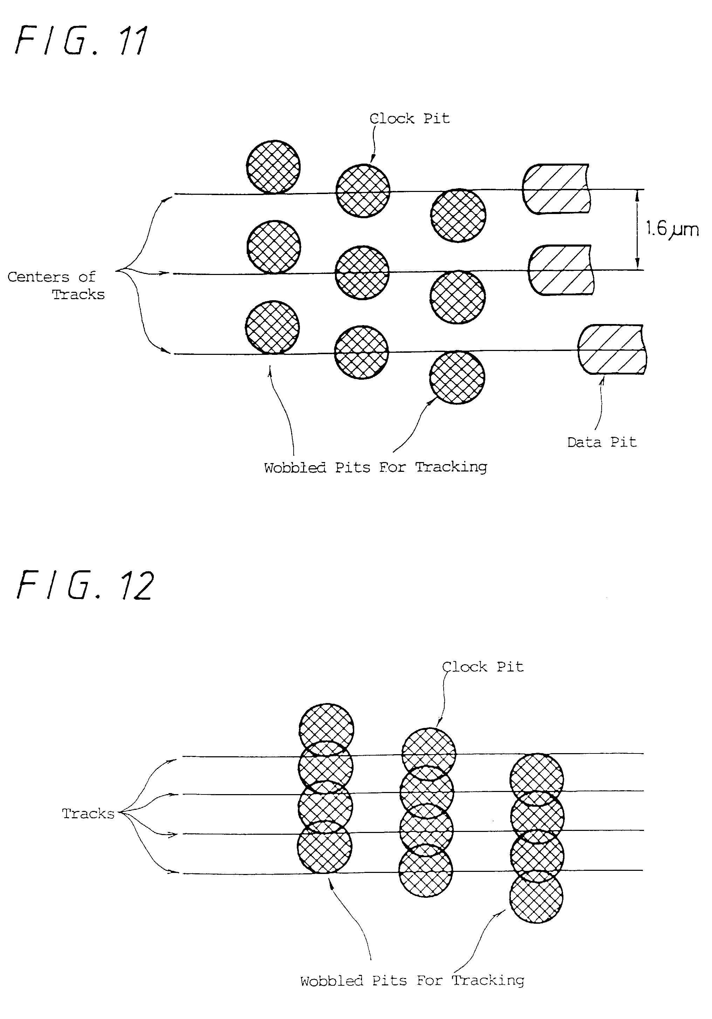

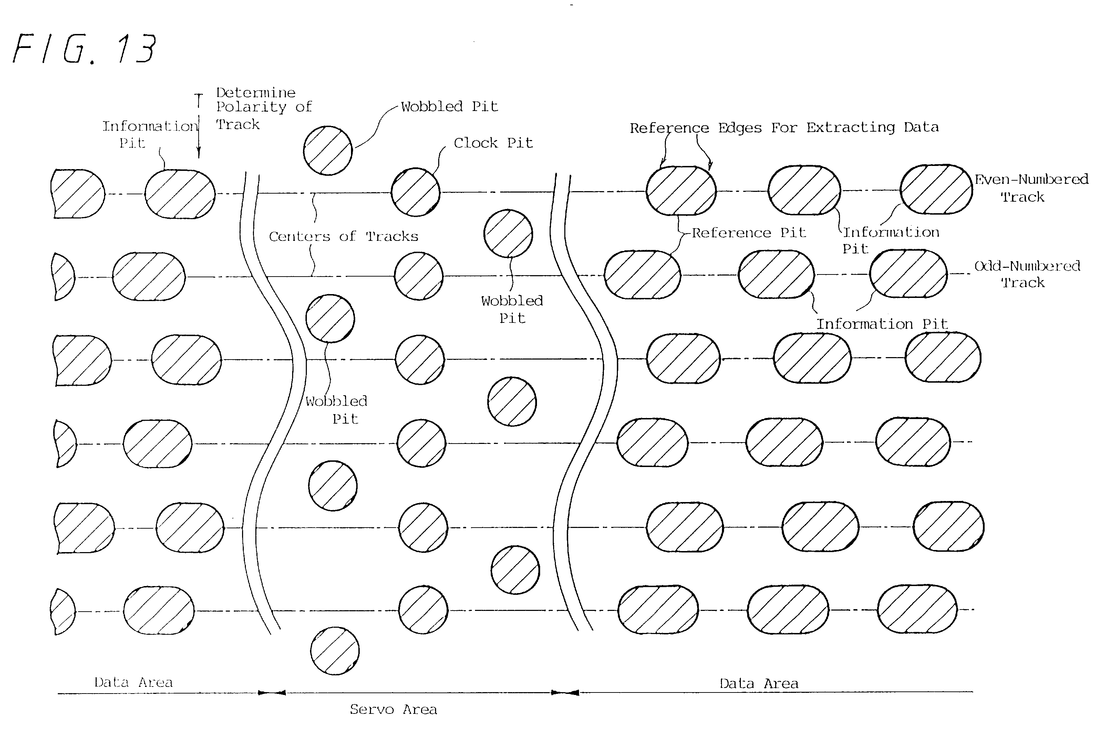

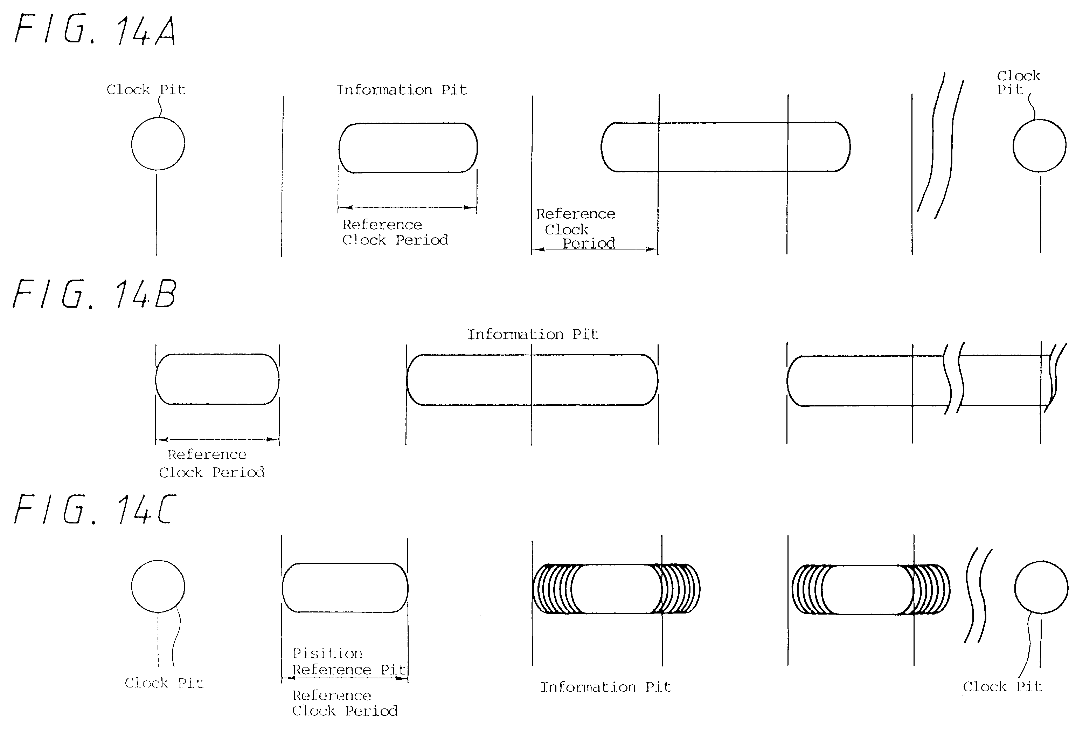

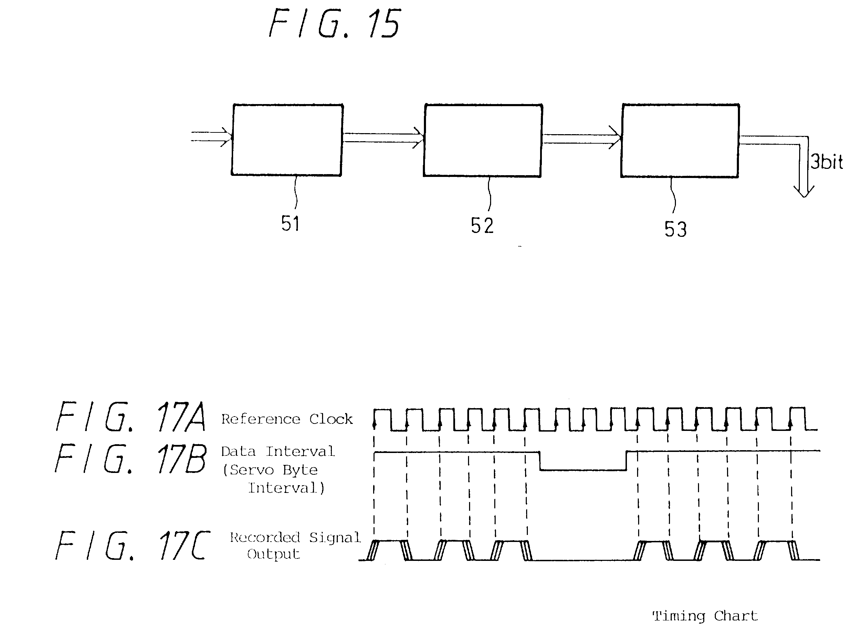

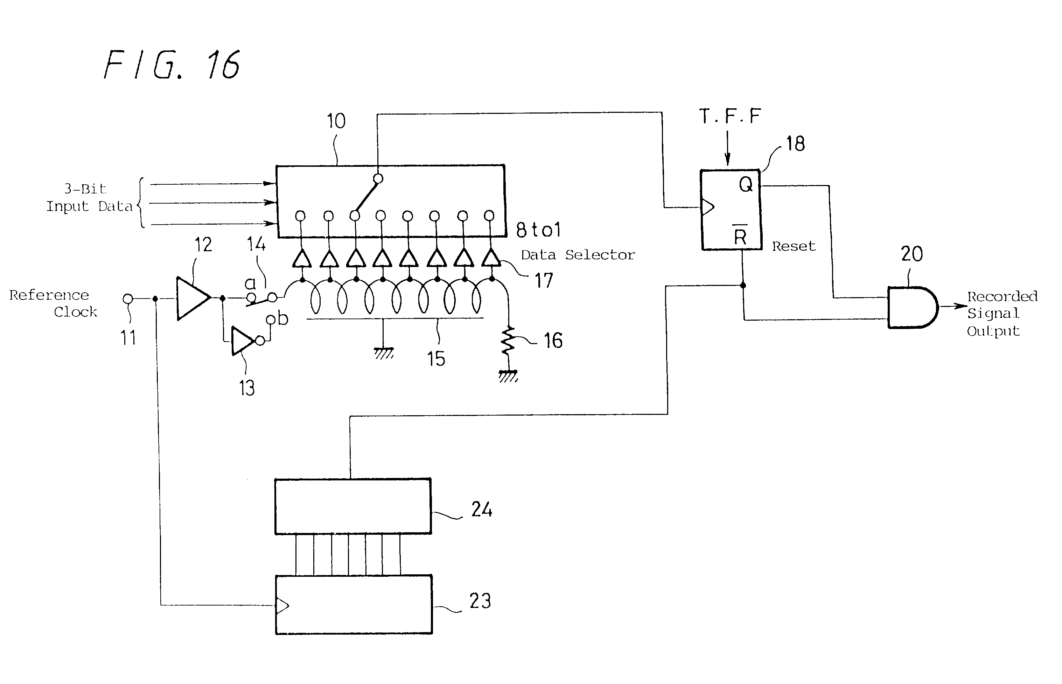

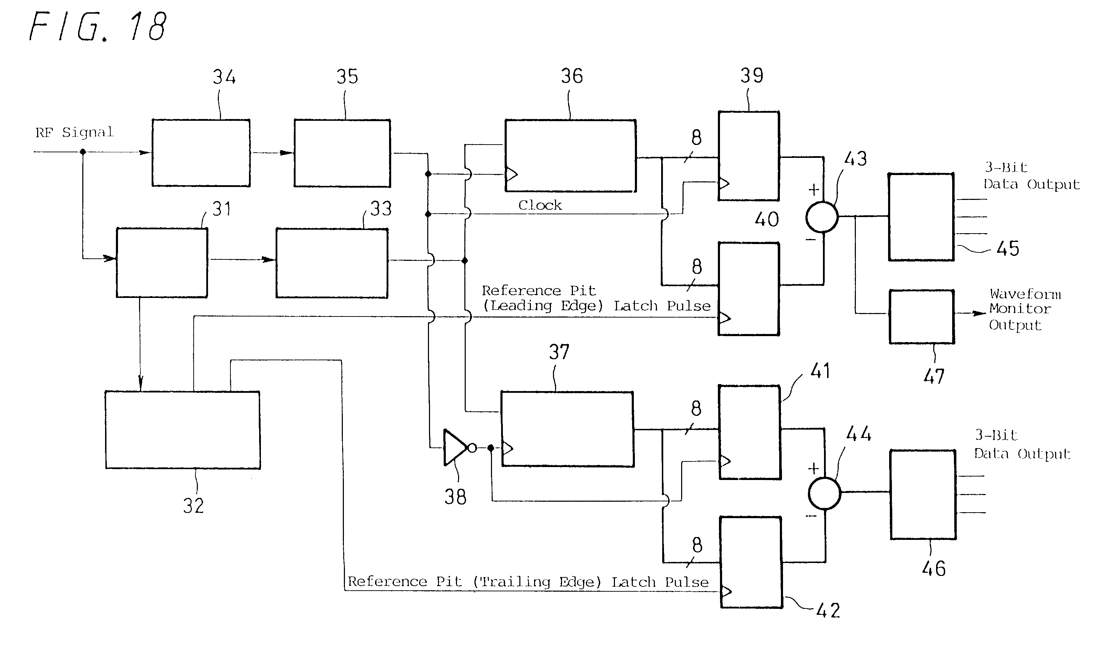

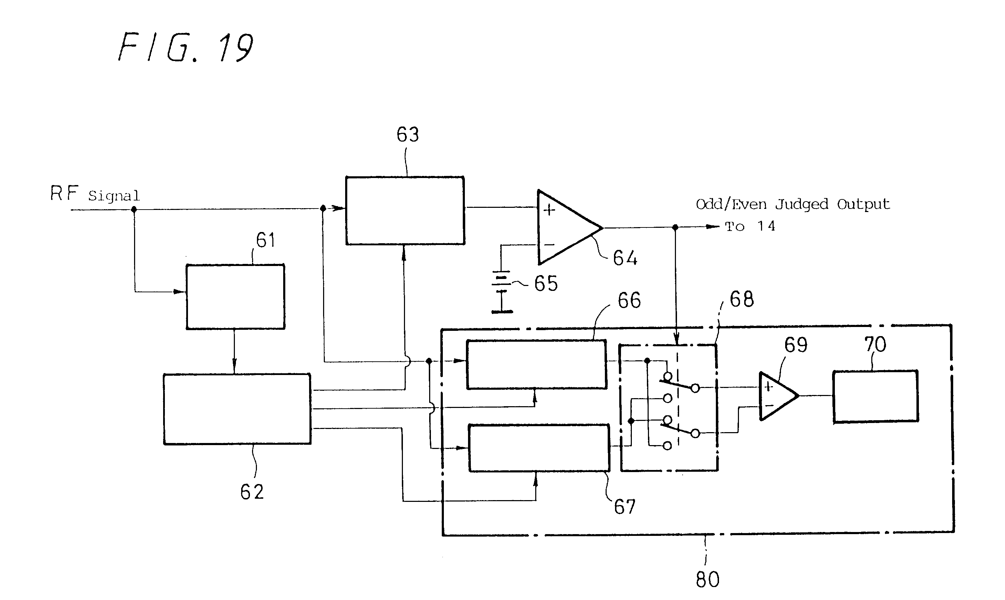

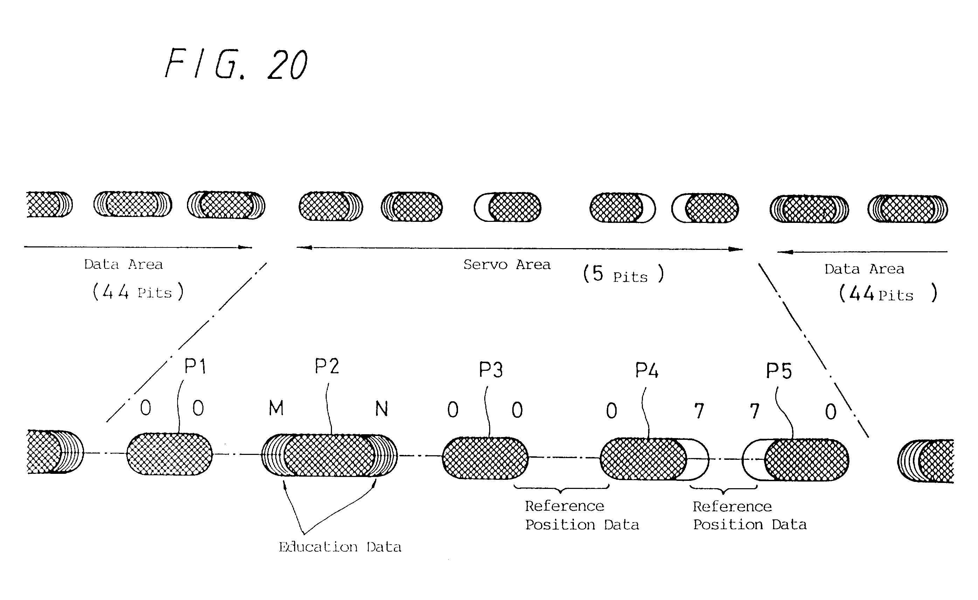

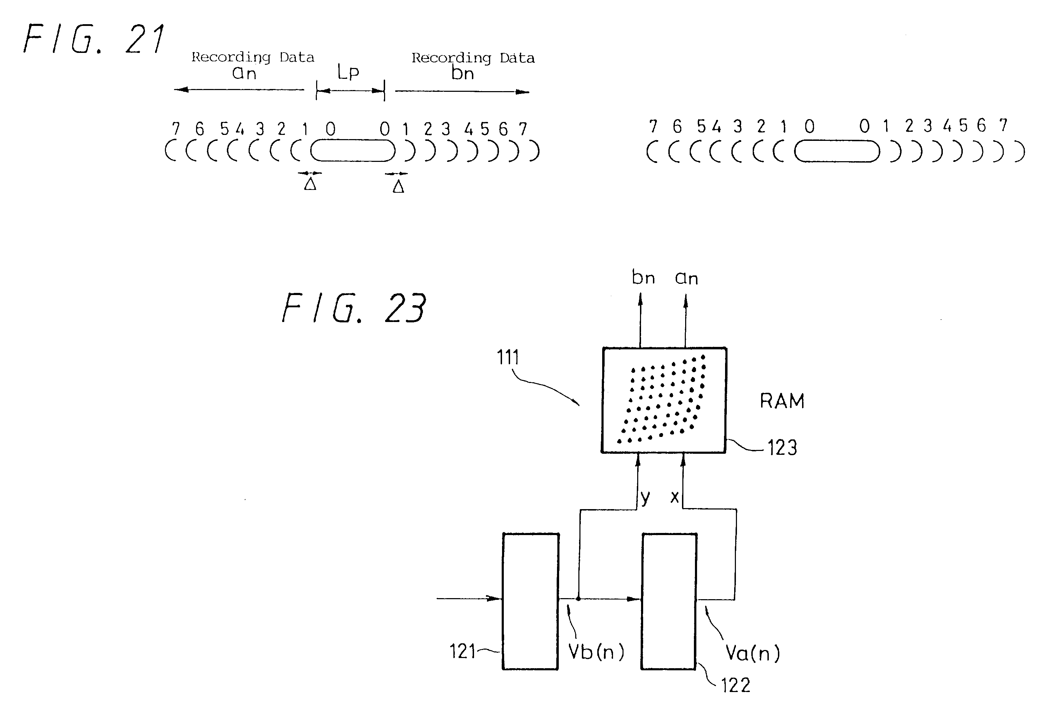

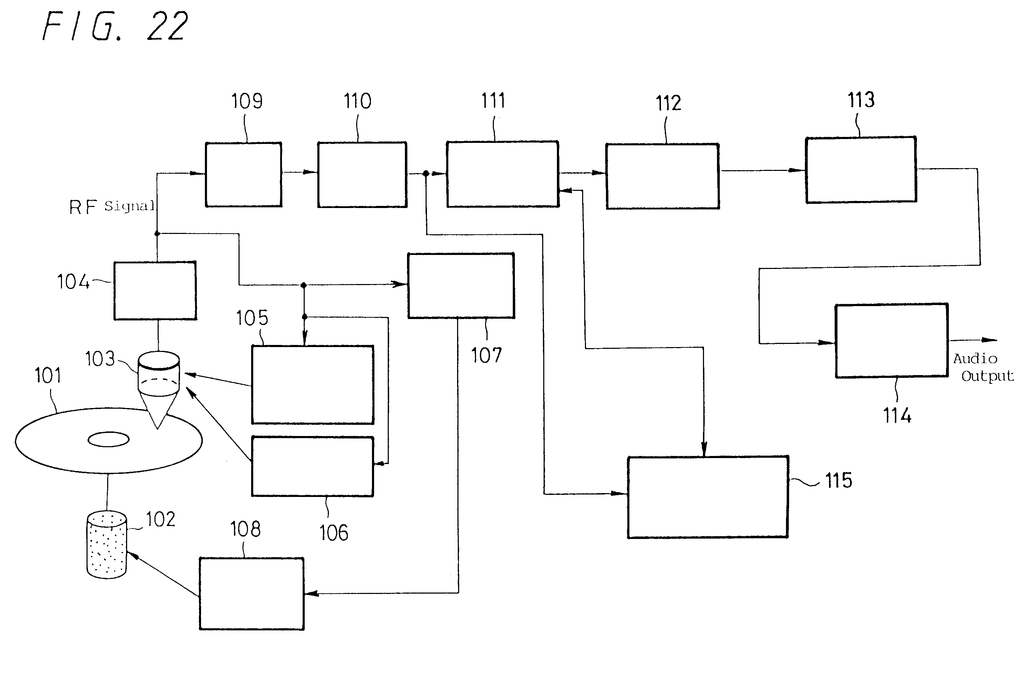

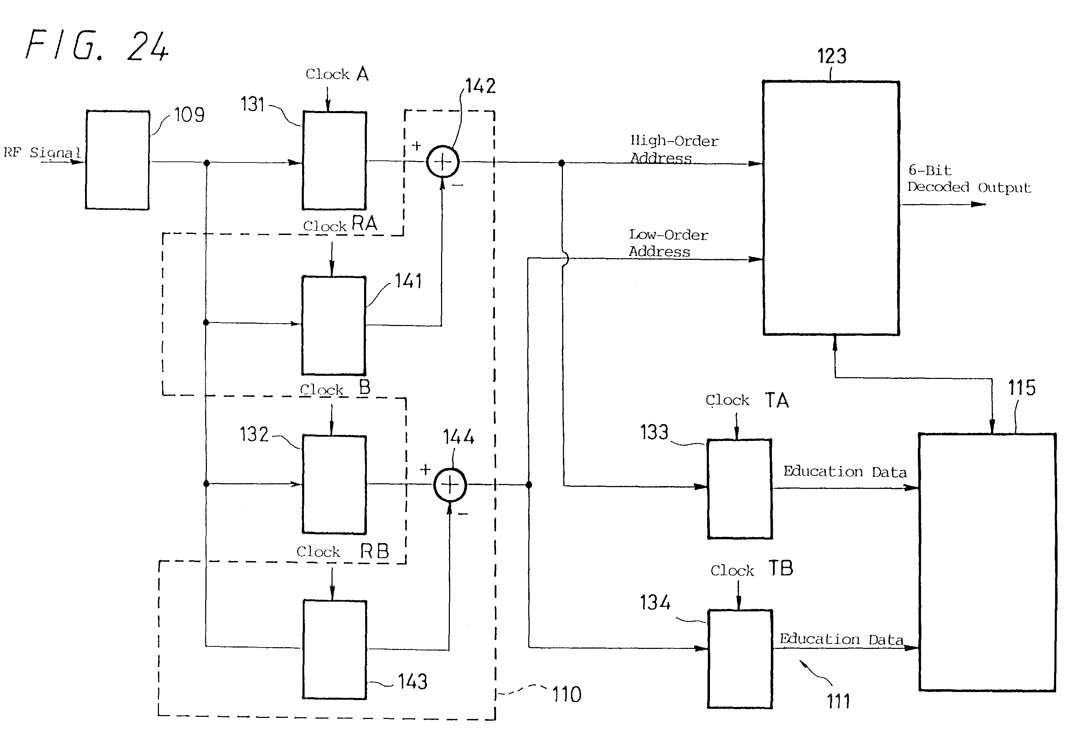

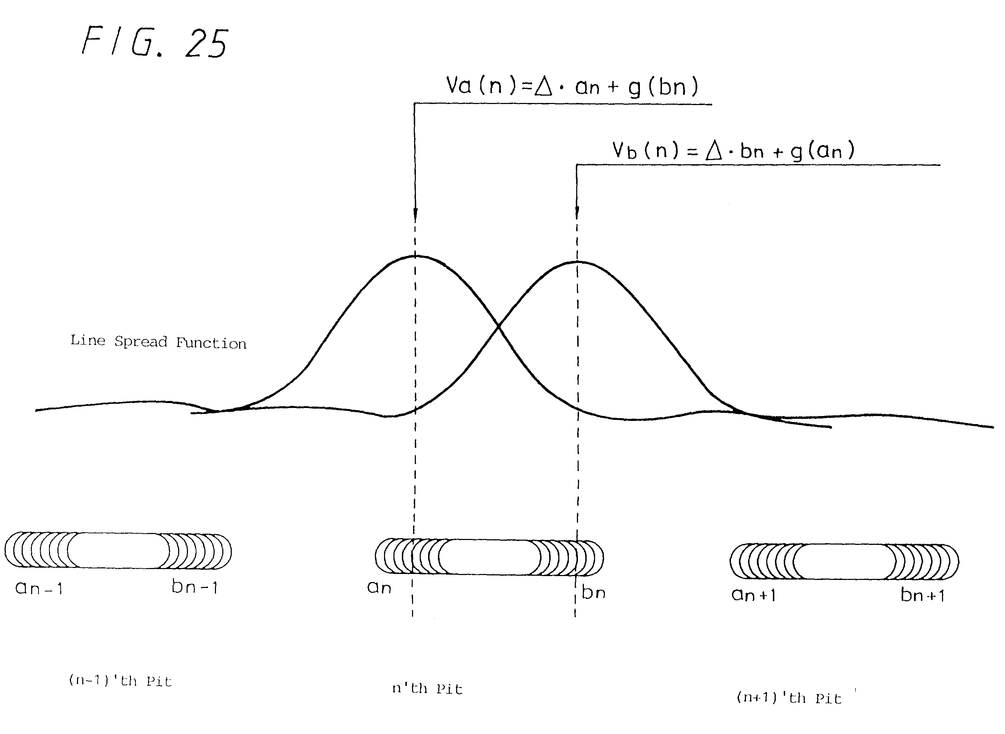

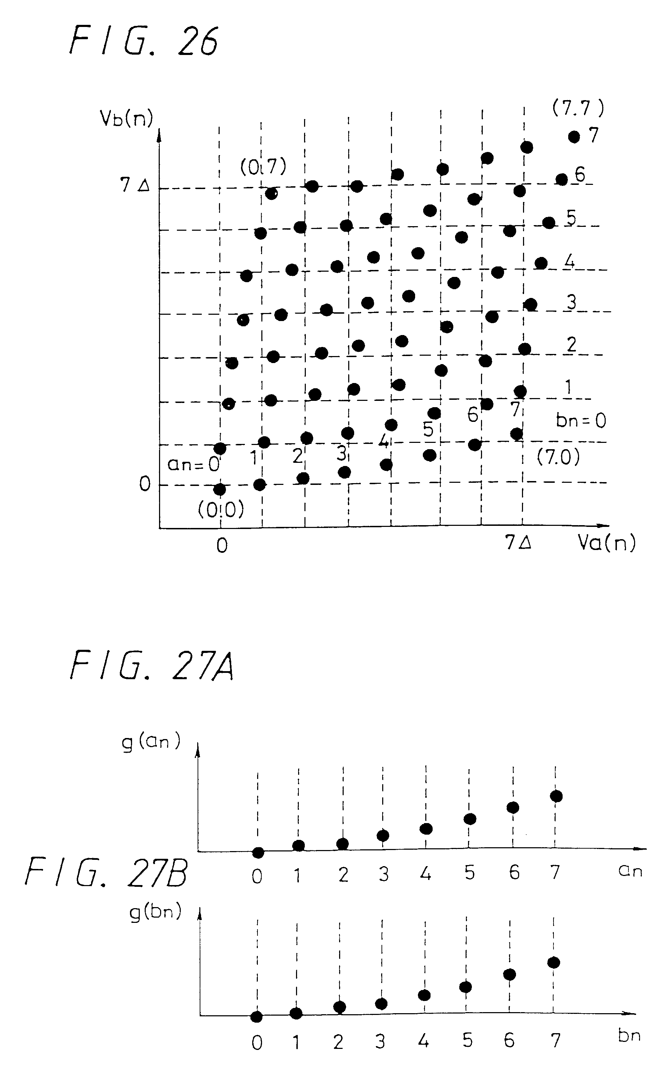

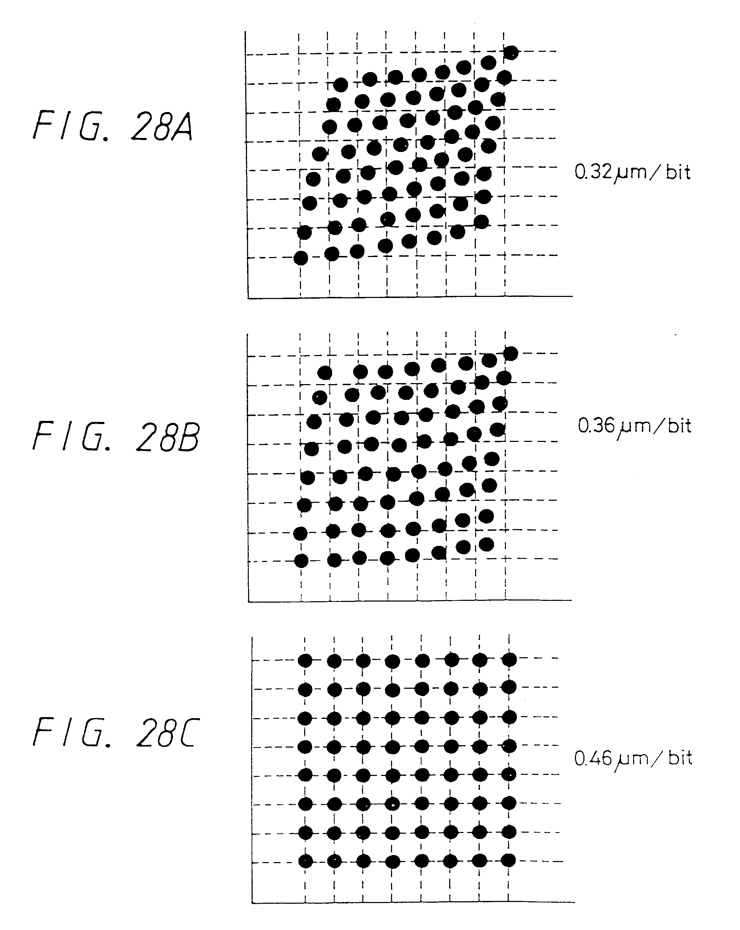

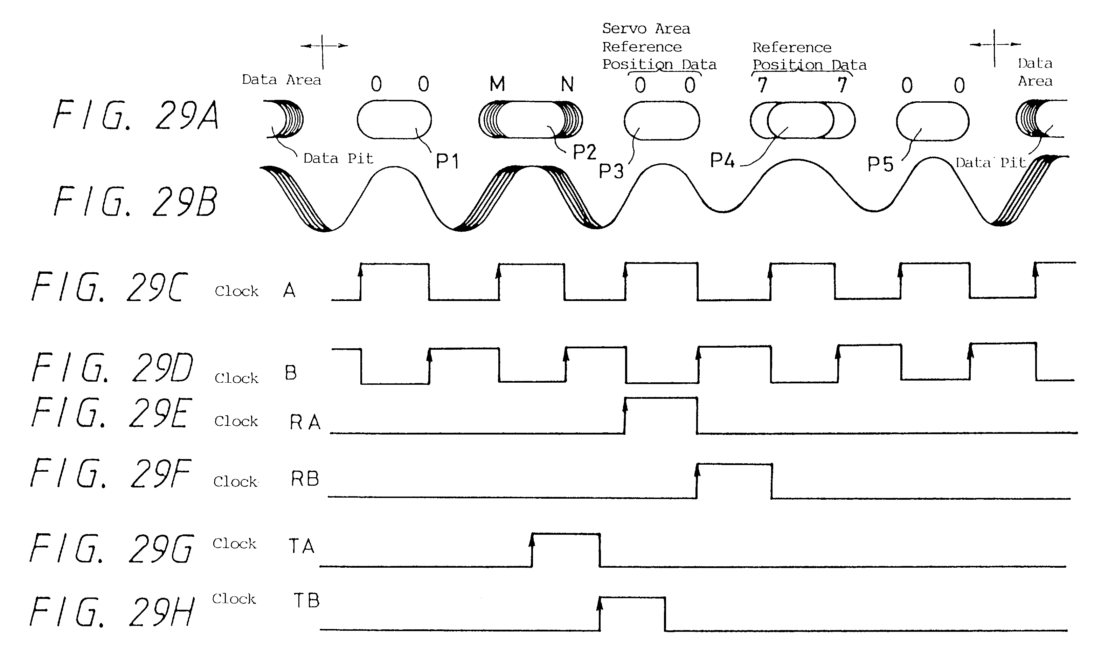

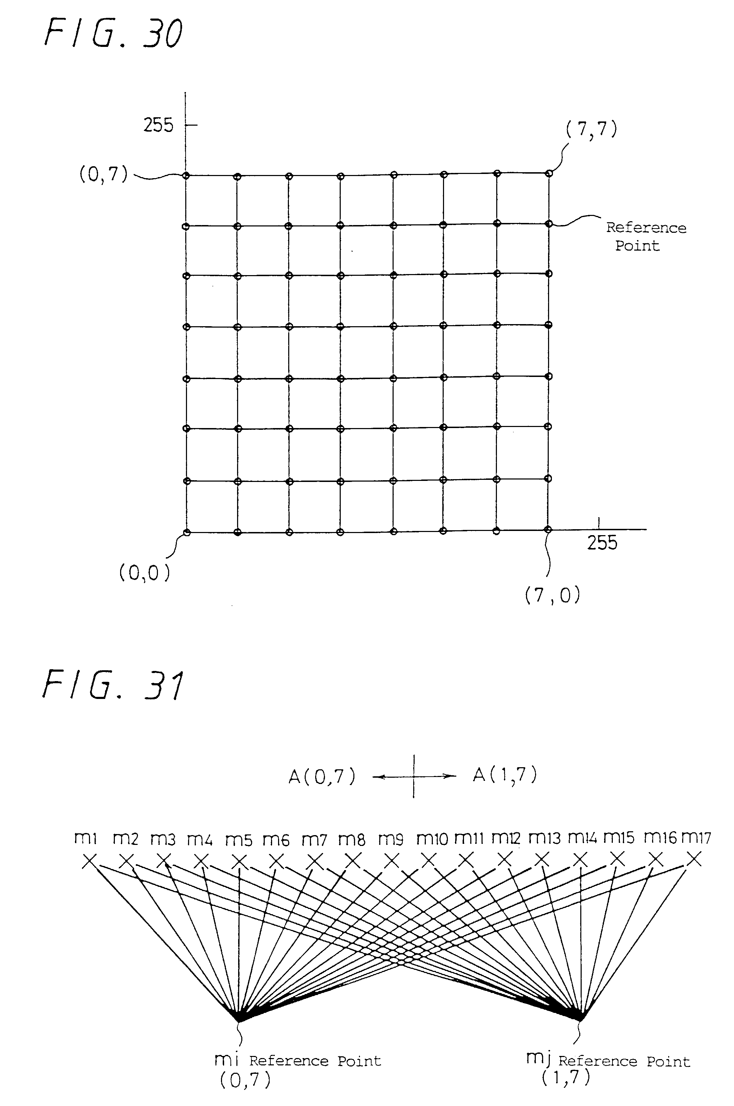

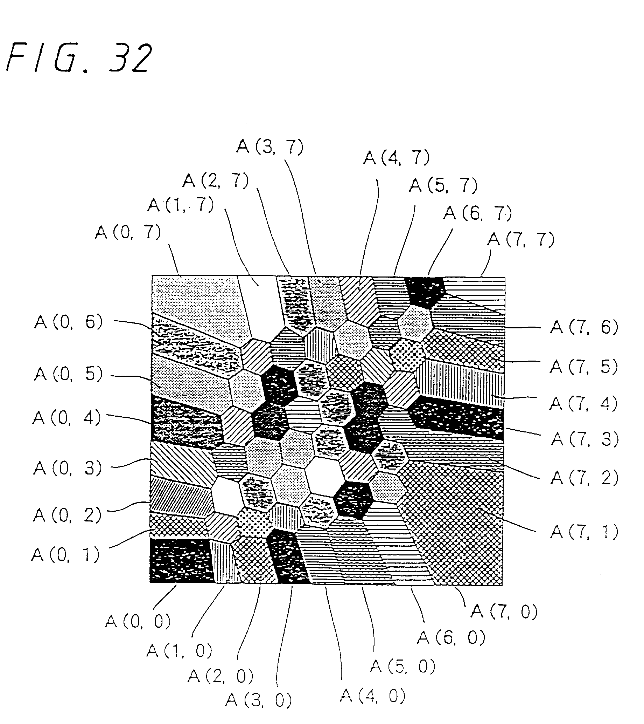

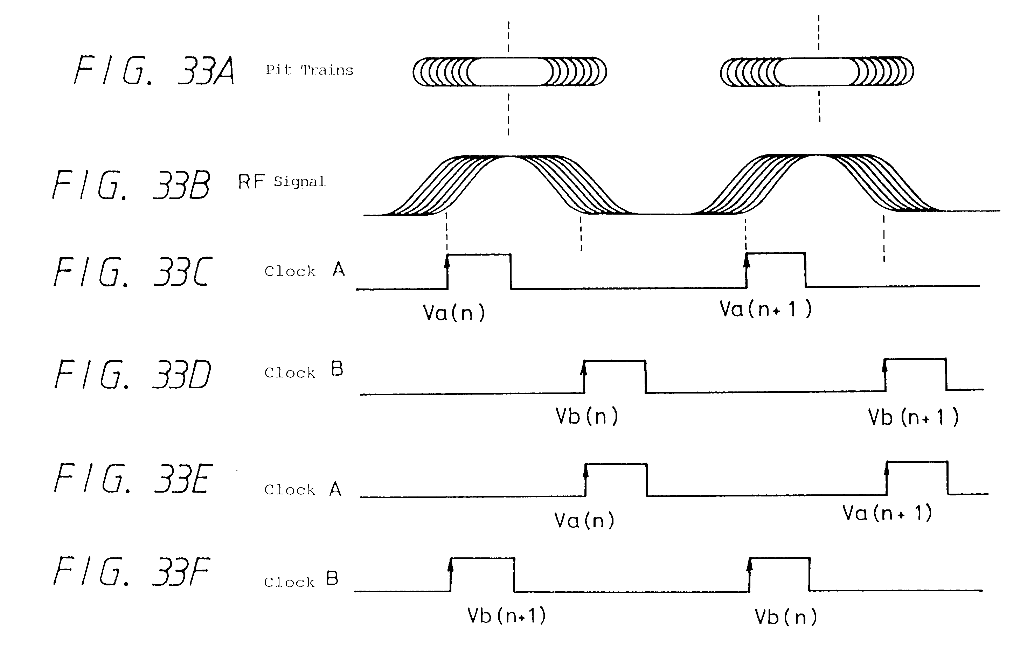

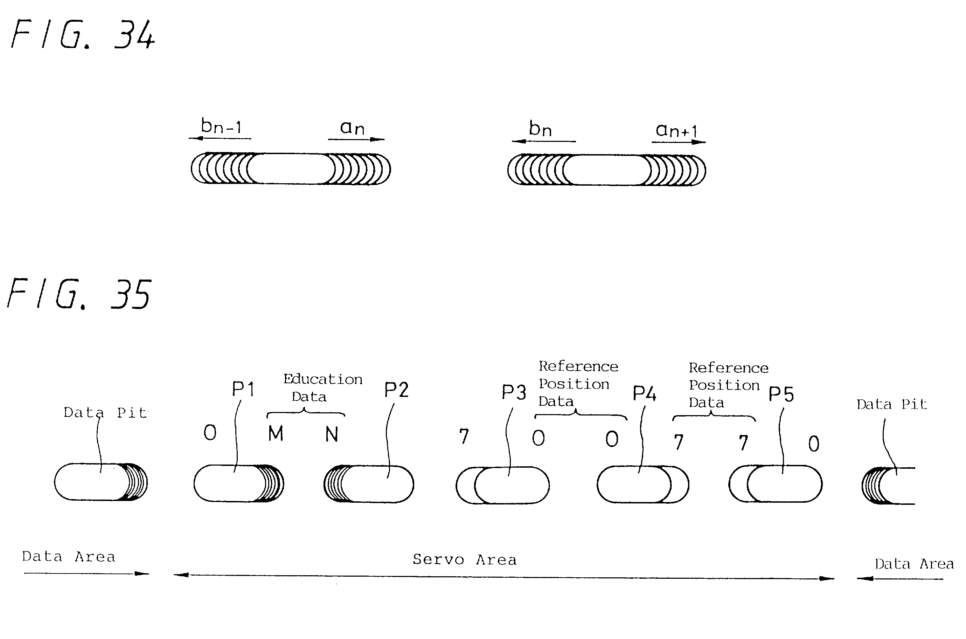

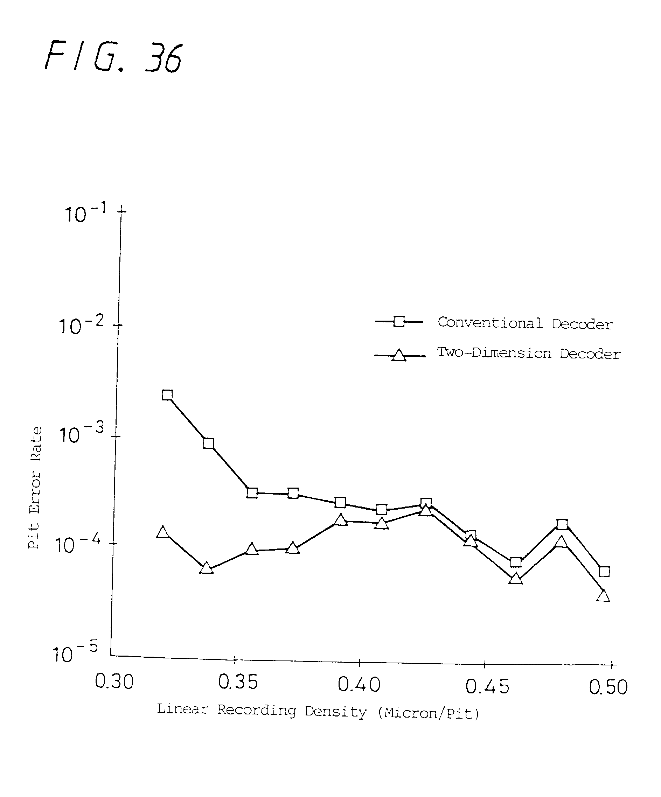

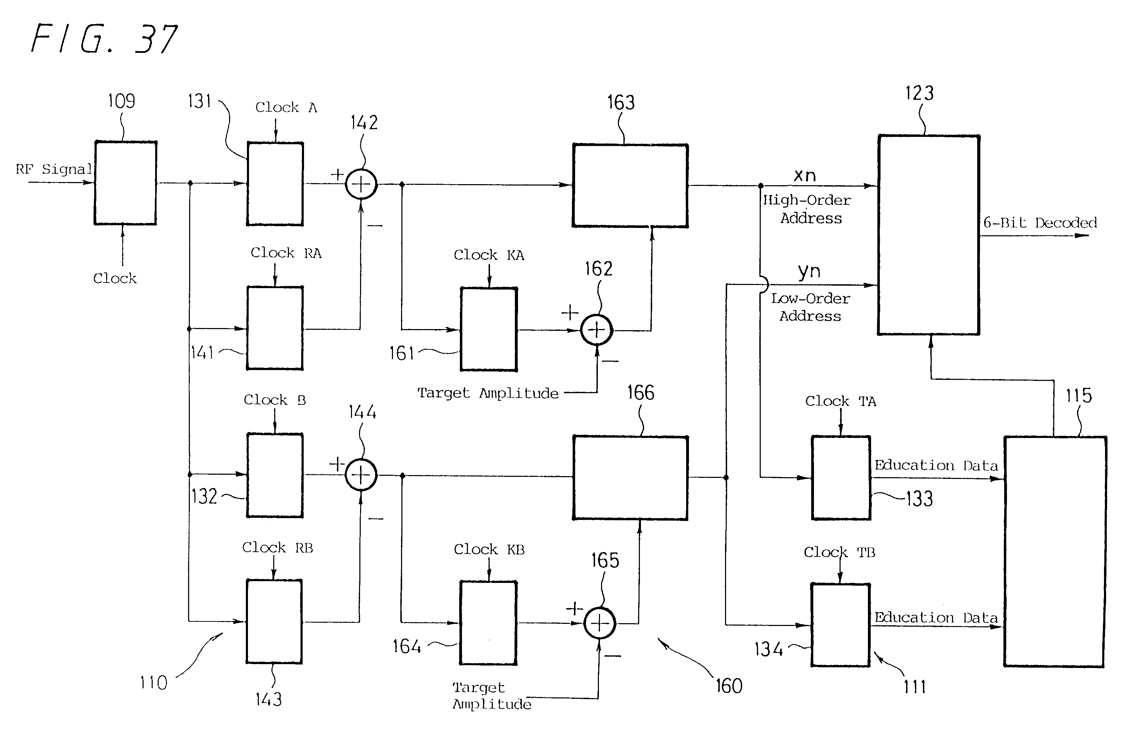

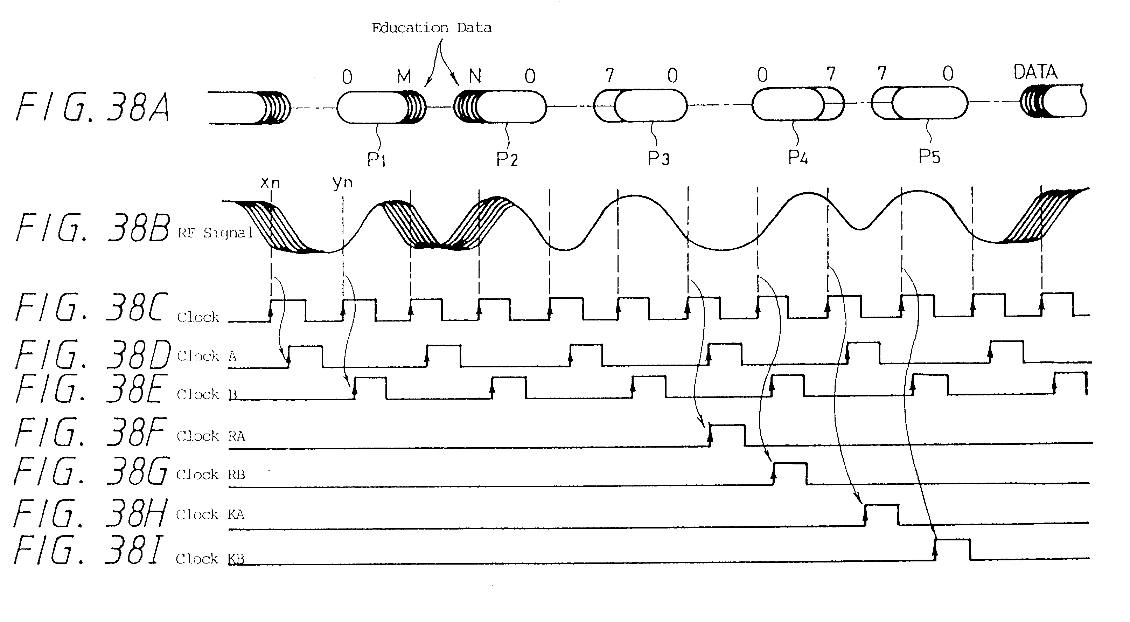

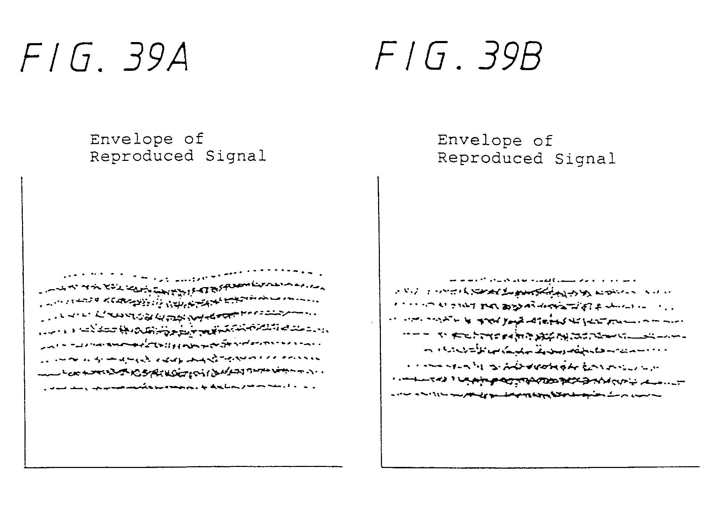

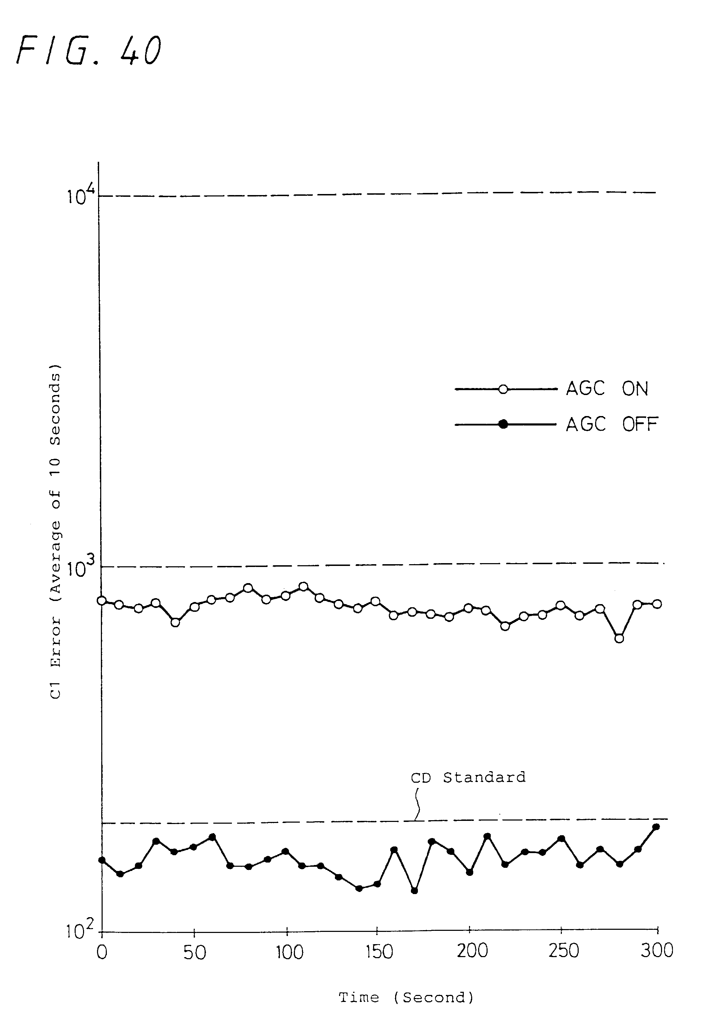

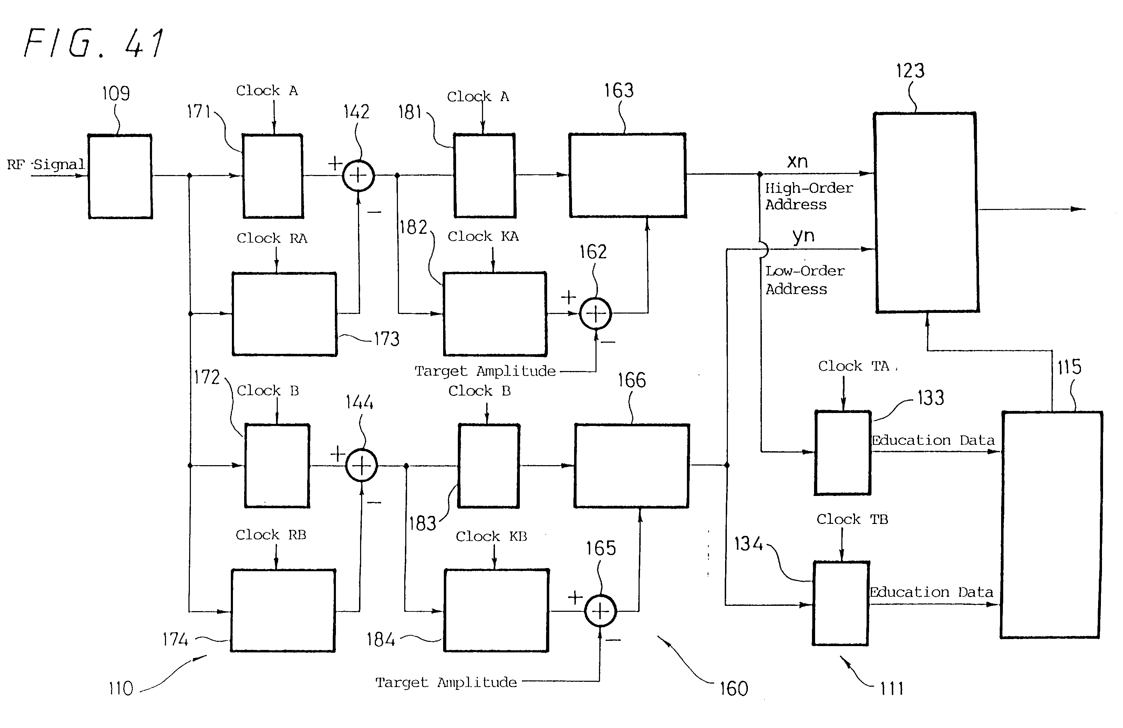

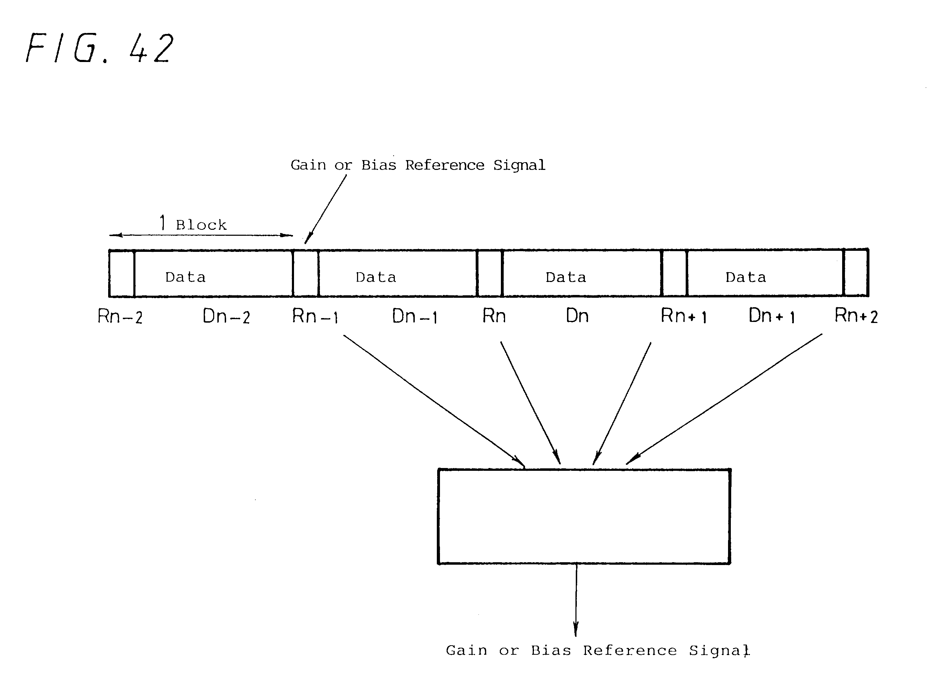

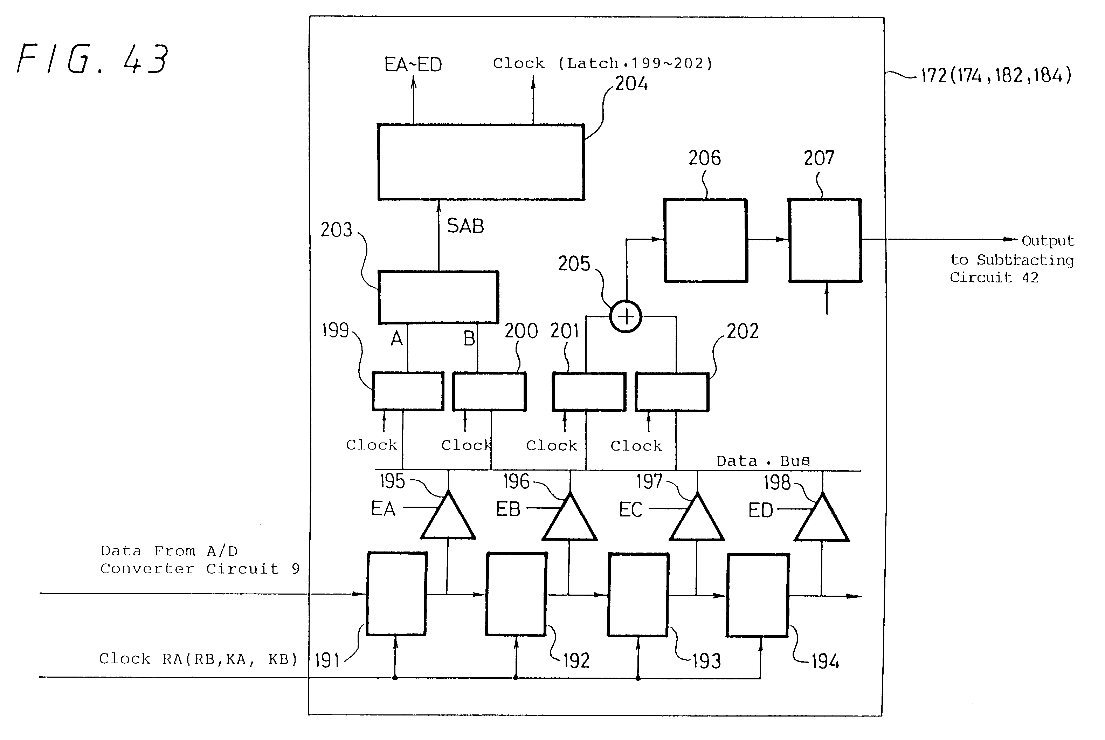

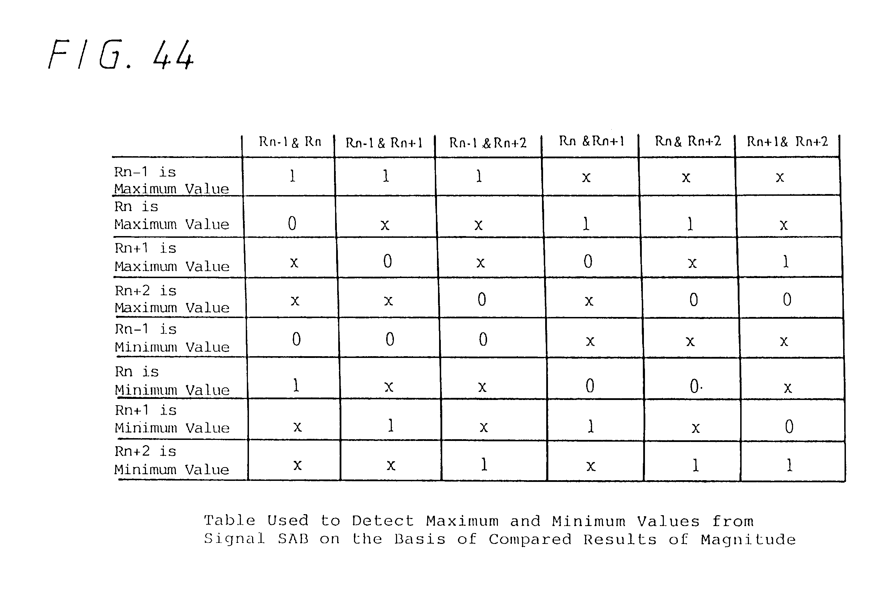

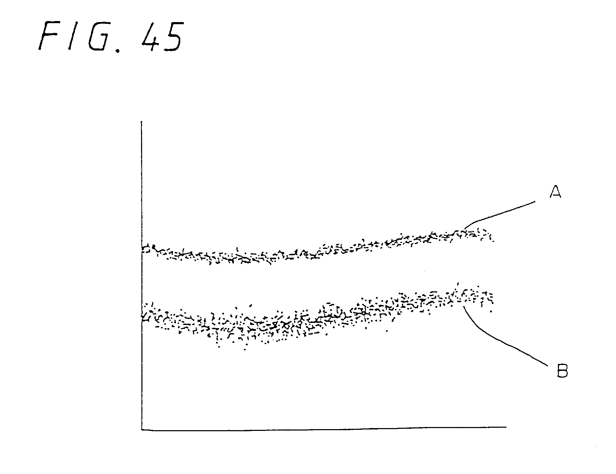

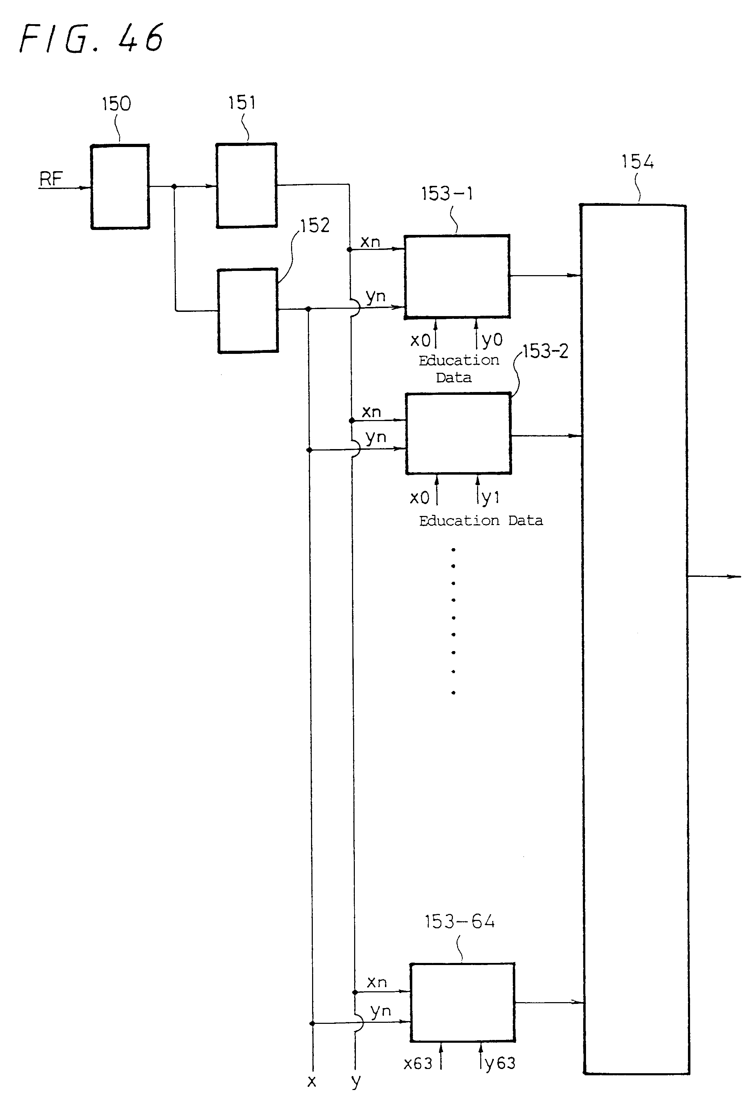

FIG. 1 is a diagram used to explain a principle by which information is recorded according to an edge of an information pit of the present invention, FIG. 2 is a diagram used to explain an information recording format of one sector according to the present invention, FIG. 3 is a diagram used to explain a principle of how to read out data from a position of an edge of an information pit according to the present invention, FIG. 4 is a diagram used to explain an influence of a fluctuation of sensitivity of an optical disk, FIG. 5 is a diagram used to explain action of a position reference pit of the present invention, FIG. 6 is a diagram used to explain the state of output obtained when a correction using the position reference pit of the present invention is not carried out, FIG. 7 is a diagram used to explain the state of output obtained when a correction using the position reference pit of the present invention is carried out, FIG. 8 is a diagram used to explain the state that a phase of the information pit is shifted by 90 degrees in adjacent tracks according to the present invention, FIG. 9 is a diagram used to explain the tracking state based on the 3-spot system, FIG. 10 is a diagram used to explain the tracking state based on the 3-spot system effected when a track pitch is reduced, FIG. 11 is a diagram used to explain the tracking state based on a wobbled pit, FIG. 12 is a diagram used to explain the tracking state based on the wobbled pit effected when the track pitch is reduced, FIG. 13 is a diagram used to explain an arrangement of pits near a servo area of the optical disk according to the present invention, FIG. 14 is a diagram used to explain a difference between the information pit of the present invention and a pit of other information recording medium, FIG. 15 is a block diagram showing an arrangement of a part of an embodiment of an information recording apparatus according to the present invention, FIG. 16 is a block diagram showing an arrangement of other portion of the embodiment of the information recording apparatus according to the present invention, FIG. 17 is a timing chart used to explain operation of the embodiment of FIG. 16, FIG. 18 is a block diagram showing an arrangement of an embodiment of an information reproducing apparatus according to the present invention, FIG. 19 is a block diagram showing an arrangement of an embodiment of a tracking servo apparatus in an information recording and reproducing apparatus of the present invention, FIG. 20 is a diagram used to explain a track format of an information recording medium of the present invention, FIG. 21 is a diagram used to explain an example of an arrangement of an information pit in the information recording medium of the present invention, FIG. 22 is a block diagram showing an arrangement of an embodiment of an optical disk reproducing apparatus to which the information reproducing apparatus of the present invention is applied, FIG. 23 is a block diagram showing an example of an arrangement of a two-dimension decoder in the embodiment of FIG. 22, FIG. 24 is a block diagram showing an example of arrangements of a bias eliminating circuit and the two-dimension decoder in the embodiment of FIG. 22, FIG. 25 is a diagram used to explain an intersymbol interference in the adjacent edges, FIG. 26 is a diagram used to explain a principle of a mapping of a reference point in a RAM, FIG. 27 is a diagram used to explain a function that shows an influence of adjacent edges, FIG. 28 is a diagram used to explain a relationship between the influence of adjacent edges and a linear density, FIG. 29 is a timing chart used to explain operation of a servo area in the embodiment of FIG. 24, FIG. 30 is a diagram used to explain the mapping of reference points on the RAM of FIG. 24, FIG. 31 is a diagram used to explain the mapping of reference points corresponding to other storage points in the RAM of FIG. 24, FIG. 32 is a diagram used to explain a mapping information of reference points corresponding to all storage points on the RAM of FIG. 24, FIG. 33 is a timing chart used to explain operation in a data area of the embodiment of FIG. 24, FIG. 34 is a diagram used to explain an example of other arrangement of the information recording pit, FIG. 35 is a diagram showing an example of an arrangement of a servo area provided when an information recording pit is arranged as shown in FIG. 34, FIG. 36 is a diagram used to explain an error rate that is realized by the embodiment of FIG. 24, FIG. 37 is a block diagram showing an arrangement of other embodiment of the optical disk reproducing apparatus to which the information reproducing apparatus of the present invention is applied, FIG. 38 is a timing chart used to explain operation of the embodiment of FIG. 37, FIG. 39 is a diagram used to explain the change of the level of an output from a gain variable amplifier in FIG. 37, FIG. 40 is a diagram used to explain an error occurrence situation that is realized in the embodiment of FIG. 37, FIG. 41 is a block diagram showing an arrangement of a further embodiment of the optical disk reproducing apparatus to which the information reproducing apparatus of the present invention is applied, FIG. 42 is a diagram used to explain operation of a defect eliminating circuit of FIG. 41, FIG. 43 is a block diagram showing an example of an arrangement of the defect eliminating circuit of FIG. 41, FIG. 44 is a diagram of a table used to explain a calculation in a controller in FIG. 43, FIG. 45 is a diagram used to explain an influence of a defect of the output of the gain variable amplifier in FIG. 41, and FIG. 46 is a block diagram showing an example of other arrangement for calculating a minimum distance between education data and reproduced data.

### BEST MODE FOR CARRYING OUT THE INVENTION

Embodiments of the present invention will be described hereinafter. FIG. 1 shows a recording principle of the present invention. As illustrated, according to the present invention, the position of at least one of the leading and trailing edges of an information pit (both the leading and trailing edges in this embodiment) is shifted in a step-wise fashion from the position of the reference edge in response to a digital recording information.

More specifically, the position (zero-cross position) of the edge of a recorded signal shown in FIG. 1B is delayed or advanced in a step-wise fashion by a predetermined time with reference to the position of the leading edge of the reference clock shown in FIG. 1C in response to recorded information. In this embodiment, the edge position is delayed so that the edge position is moved rightward from the reference position in the figure. When the above-mentioned edge position is advanced from a time standpoint, the edge position is moved leftward in the figure.

Assuming that each edge represents 3-bit digital data (i.e., [0], [7]), then each edge is formed at the reference position when data is [0], each edge is delayed by a unit delay time (one step) when data is [0], each edge is delayed twice (2 steps) of the unit time when data is [1], and each edge is delayed by three times (3 steps) of the unit time when data is [3]. In a like manner, when data is [7], the edge is delayed seven times (7 steps) of the unit time.

When information is recorded as described above, information pits are formed on the optical disk as shown in FIG. 1A. The information pit can be formed as a physical concave or convex portion and also can be formed by making the characteristics (e.g., reflectivity or transmittance, etc.) of the information recording medium different from those of other portion. In this embodiment, [3] and [7] are expressed by the leading edge and the trailing edge of the first information pit following the position reference pit (position reference pit will be described later on), and [0] and [4] are expressed by the leading edge and the trailing edge of the next information pit. Assuming that 0.05 µm is a length on the recording medium corresponding to the unit time (one step) of the delay of the recorded signal, then the respective edges are shifted rightward by 3 x 0.05 µm, 7 x 0.05 µm, 0 x 0.05 µm and 4 x 0.05 µm from the reference position. A length (length provided when neither of the leading and trailing edges are delayed) on the optical disk corresponding to one period of the reference clock is set to be 1.2 µm.

When the edge of the information pit is shifted from the reference position in response to the digital recording information as described above, the reference position of the edge must be clarified. To this end, as shown in FIG. 2, a PLL clock (clock pit) is recorded in the information recording medium at a constant period (e.g., one rotation of the optical disk is segmented into 4200 sectors and one servo area is provided in each sector so that such pit is recorded with a ratio of one pit to each servo area).

When information is recorded, this PLL pit (clock pit) is reproduced and the reference clock (FIG. 1C) is generated in synchronism with this pit. The reference position of the edge is determined on the basis of this reference clock (the leading edge of the reference clock is used as the reference position of the edge of the information pit in this embodiment). There are formed a plurality of information pits between this clock pit and the clock pit.

FIG. 3 shows a principle in the reproducing mode. Upon playback, an RF signal shown in FIG. 3A is obtained by reproducing an optical disc in which information is recorded as shown in FIGS. 1 and 2. If this RF signal is amplified and converted into a binary signal, then there is obtained a binary RF signal shown in FIG. 3B. When the clock pit (PLL pit) is separated from this binary RF signal and synchronized, then there is generated a reference clock shown in FIG. 3C. Further, a sawtooth wave signal (might be a triangular wave signal) shown in FIG. 3D is generated in synchronism with this reference clock.

This sawtooth wave signal reaches a maximum level [255] immediately before the trailing edge of the reference clock, is suddenly lowered to the minimum level after the trailing edge and is then increased again to the maximum value linearly. Therefore, the level of 256 steps can be judged by this sawtooth wave signal. Accordingly, the level (shift of the edge of the information pit) of the sawtooth wave signal (FIG. 3D) in the timing of the leading edge and the trailing edge of the binary RF signal (FIG. 3B) is detected. Also, the level (reference position of the edge of the information pit) of the sawtooth wave signal (FIG. 3D) in the leading edge of the reference clock (FIG. 3C) is detected. Then, the shift (i.e., recorded data) from the reference position of the edge of the information pit can be detected on the basis of the difference therebetween.

If a sensitivity of the optical disc is fluctuated or a recording laser power is fluctuated from a time standpoint, then pits to be formed also are fluctuated. FIG. 4 shows this state. More specifically, when a recording laser light of the same level (intensity) is radiated, if a sensitivity of the optical disk is low, then the length of a pit to be formed is reduced as compared with that of the case where a sensitivity is high. Also, even when the sensitivity is constant, if a power of a recording laser light is fluctuated, then a similar fluctuation occurs.

If such fluctuation occurs, then it becomes impossible to form, i.e., record accurate information at the accurate position of the above-mentioned edge. Therefore, in this embodiment, the position reference pit is recorded at a constant period in addition to the reference pit (PLL pit). In this embodiment, one position reference pit is formed immediately after the clock pit (i.e., one position reference pit is formed in each sector) and a plurality of information pits are formed after the clock pit. Both the leading edge and the trailing edge of the position reference pit are constantly located at the reference position (at the position of the leading edge of the reference clock).

Action of the position reference pit will be described with reference to FIG. 5. As shown in FIG. 5A, the initial pit is selected to be the position reference pit and therefore data corresponding to both edges are set to [0]. With the leading edges and trailing edges of three information pits following the position reference pit are associated data of [3] and [0], [2] and [5], and [1] and [0], respectively. Therefore, assuming now that the optical disc has a proper sensitivity, then there are formed position reference pits and information pits shown in FIG. 5C on the optical disk in response to a recording signal (recording pulse) shown in FIG. 5B.

Upon playback, when the leading and trailing edges of each pit are detected and the level of a sawtooth wave signal shown in FIG. 5D in that detection timing is read out, values in the leading and trailing edges of the position reference pit are both [64]. In that case, when the leading and trailing edges of three information pits are detected and the levels of the sawtooth wave signals in that detection timing are detected, the detected levels are [82] and [64], [76] and [94], and [70] and [64] as shown in FIG. 5E, respectively. In order to calculate shifted amount of these values from the reference position, the levels of the sawtooth wave signals in the leading edges of the reference clocks in the respective pits are detected and the detected values are subtracted as described above. The level of the sawtooth wave signal in the timing of the edge of the reference clock becomes the same as the level of the position reference pit. Accordingly, instead of reading out the level of the sawtooth wave signal corresponding to the edge of the reference clock at every pit, the levels of the sawtooth wave signals in the leading and trailing edges of the position reference pit and the level of the sawtooth wave signal corresponding to the edge of the reference clock at every pit can be used as the level of the sawtooth wave signal corresponding to the edge of the reference clock at every pit (second effect of the position reference pit can be achieved in addition to a sensitivity correcting action (first effect) which will be described later on).

In the case of this embodiment, by subtracting the values [64] and [64] in the position reference pit from the values shown in FIG. 5E, i.e., [82] and [64], [76] and [94] and [70] and [64], [18] and [0], [12] and [30], [6] and [0] can be obtained as values corresponding to the shifted amount as shown in FIG. 5F, respectively. Of these shifted amount, the value [6] corresponds to the above-mentioned unit delay time so that [3] and [0], [2] and [5] and [1] and [0] can be obtained by dividing these values by [6], respectively. These values become the same as the original data shown in FIG. 5A.

When a sensitivity of the optical disk is too high, as shown in FIG. 5G, the position reference pit and the information pit are extended in response to the recording pulse shown in FIG. 5B as compared with the case of the proper sensitivity shown in FIG. 5C. The fluctuation of sensitivity becomes substantially constant in one optical disk regardless of a fluctuation of each optical disk. Even if a local fluctuation occurs in one optical disk, then it is to be considered that such fluctuation of sensitivity is substantially constant in a range (within one sector) of a period in which at least the position reference pit is formed.

Therefore, assuming that the position of the leading edge in the position reference pit is reduced by [10] from the conventional reference position in the terms of the level of the sawtooth wave signal (FIG. 5H) as shown in FIG. 5I, then the position of the trailing edge is increased by [10] from the original reference position in terms of the level of the sawtooth wave signal. Consequently, they become [54] (= 64 - 10) and [74] (= 64 + 10). Similarly, the positions of the leading edge and the trailing edge of each information pit are reduced or increased by [10] from the original recording position in terms of the level of the sawtooth wave signal. More specifically, values of the sawtooth wave signal (FIG. 5H) in the timings of the leading edge and the trailing edge of respective information pits (FIG. 5G) become [72] (= 82 - 10) and [74] (= 64 + 10), [66] (= 76 - 10) and [104] (= 94 + 100, [60] (= 70 - 10) and [74] (= 64 + 10) as shown in FIG. 5I, respectively.

Accordingly, by subtracting the reference pit values [54] and [74] from these information pit values [72] and [74], [66] and [104] and [60] and [74], [18] and [0], [12] and [30], and [6] and [0] are obtained as shown in FIG. 5J, respectively. These values become the same as those of the proper sensitivity shown in FIG. 5F (this is the first effect achieved by the position reference pit).

While the present invention has been described so far in association with the case that the sensitivity is too high, when the sensitivity is too low, the edge of the information pit is reduced by the same length as that of the edge of the position reference pit so that, similarly to the case that the sensitivity is too high, the same data as those in the case of the proper sensitivity can be obtained.

More specifically, since the position reference pit is formed as described above, the sawtooth wave signal need not be read at every reference clock of each pit. Also, even when a fluctuation of sensitivity or the like occurs, the recording and reproduction of correct data become possible.

FIGS. 6 and 7 are diagrams used to explain the effects achieved by the correction by using the position reference pit. In both figures, the abscissa represents a time and the ordinate represents a voltage. The voltage on the ordinate represents data from [0] to [7] shown in FIG. 1 in terms of voltage. That is, when the shift amount (this shift amount is any one of the aforementioned [0] to [7]) of the edge obtained at a certain time (predetermined position on the abscissa) from the reference position is [0], such edge is expressed by a point of the lowest predetermined voltage. If such shift amount is [7], then the edge is expressed by a point of the highest predetermined voltage. Data that are expressed by respective edges of successively reproduced information pits are expressed in the form of points of the predetermined voltages (such waveforms are obtained by monitoring an output of a D/A converter 47 in FIG. 18 that will be described later on).

FIG. 6 shows the state that the correction is not carried out by using the position reference pit. In the case of this figure, points that should be arranged on a horizontal line indicative of a constant voltage are considerably shifted on the ordinate direction at every data of [0] to [7]. This means that, even in the edge that expresses the same [5], its shift amount from the reference position is increased (e.g., shift amount (voltage) that inherently expresses the data [7]) or decreased (e.g.. shift amount (voltage) that inherently expresses the data [3]) depending on the cases, i.e., the shift amount is changed. In order to determine (identify) that data is any one of [0] to [7], an intermediate voltage between a voltage (shift amount) indicative of one data (e.g., [5]) and a voltage (shift amount) indicative of adjacent data (e.g., [6]) must be selected to be a threshold value and it must be determined whether or not the voltage is larger or smaller than the threshold value. However, when voltages that indicate respective data are fluctuated as shown in FIG. 6, it becomes impossible to determine (identify) whether or not data is data ([5] or [6]) that is based on the fixed predetermined threshold voltage.

FIG. 7 shows the case that the correction by the position reference pit is carried out. In this case, it is to be appreciated that voltages (shift amounts) of respective data become constant. Accordingly, in this case, respective data can be identified with ease on the basis of a predetermined threshold value.

FIG. 8 shows a relationship between pits (position reference pit and information pit) in adjacent tracks. In the case of a CAV (rotation angular velocity is constant) disc, as shown in the figure, phases (phases provided when data is [0]) of the pits of adjacent tracks (odd-numbered track and even-numbered track) are shifted by 90 degrees. In other words, the phase of the recording signal provided when the data is [0] is shifted by 90 degrees. This also means that the phase of the reference clock of the odd-numbered track is shifted from the phase of the reference clock of the even-numbered track by 180 degrees when the phase of the reference clock is considered. With the above-mentioned arrangement, when the edge of one position reference pit or information pit of one track is reproduced by one beam spot, the edges of the adjacent tracks do not locate in the beam spot so that a crosstalk is reduced. Accordingly, the track pitch is reduced and a higher density recording can be realized.

The tracking method will be described next. As one of the tracking methods, there is known a so-called three-spot (beam) method. According to this method, as shown in FIG. 9, two sub beams (spots) are provided at both sides of a main beam (spot) that is inherently provided to reproduce information. By arranging the sub beams at the right and left edges of the track direction, it is possible to detect reflected beams from the two sub beams by a photo-detector. Accordingly, a tracking error signal can be obtained from a difference between the outputs. However, according to this method, as shown in FIG. 10, if the track pitch is reduced, the sub beam reads out information from the adjacent track and a tracking error signal cannot be generated.

Some optical disks employ a so-called sample servo system. According to this method, as shown in FIG. 11, wobbled pits are located at the positions slightly displaced from the center of the track in the right and left direction and which are also displaced in the track direction. A tracking error signal can be generated from a level difference of the reproduced signals of the two wobbled pits. However, also in this method, if the track pitch is reduced, then as shown in FIG. 12, the wobbled pits for the adjacent tracks interfere with each other so that a correct tracking error signal cannot be generated.

Therefore, this embodiment adopts the sample servo system shown in FIG. 11 fundamentally. As shown in FIG. 13, on the servo area, there are provided one clock pit (PLL pit) that is located on the central line of the track and two wobbled pits which are displaced from the central line of the track in the right and left direction and which are also displaced in the track direction (so as to oppose to each other across the clock pit). These pits are recorded (formed) in advance as, for example, physical concave and convex portions before original information is recorded. Then, the respective wobbled pits are arranged so that they can be used commonly on the adjacent tracks. In other words, the wobbled pit is just located between the tracks. One wobbled pit is used for the right and left tracking. With this arrangement, the track pitch can be reduced and the tracking error signal can be generated.

When one wobbled pit is used both in the right and left tracks, a polarity of the tracking servo must be inverted at odd-numbered track and even-numbered track. An embodiment of this case will be described later with reference to FIG. 19.

When the phase of the position reference pit and the phase of the information pit are displaced 90 degrees on the odd-numbered track and even-numbered track, as shown in FIG. 13, the position of the last information pit in one (even-numbered even-numbered track in this embodiment) of, for example, the track or odd-numbered track is displaced in the rearward from the other track (even-numbered track in this embodiment). Observing such phenomenon on a time axis (on a reproduced signal), the last information pit appears in the even-numbered track with a delay as compared with the case of the odd-numbered track. Alternatively, examining the position reference pit located immediately after the clock pit, the position reference pit appears in the even-numbered track with a delay as compared with the case in the odd-numbered track. Accordingly, the odd-numbered track or even-numbered track can be judged by detecting the timing at which the last information pit or position reference pit is generated. This embodiment also will be described later with reference to FIG. 19.

In order to more clarify the specific features of the information recording method according to the present invention, the conventional recording method and the recording method of the present invention are compared with reference to FIG. 14. In the optical disk of the conventional sample servo system, as shown in FIG. 14A, a reference clock (channel clock) is generated in synchronism with the clock pit. Then, the period of reference clock is taken as one unit and a pit having a length of an integral multiple of such unit is formed. The length of the pit depends on recording information.

Further, although the clock pit is not formed in the compact disc, as shown in FIG. 14B, the period of the reference clock (channel clock) is taken as one unit and a pit having a length of an integral multiple thereof is formed.

On the other hand, according to the embodiment of the present invention, as shown in FIG. 14C, the reference clock is generated in synchronism with the clock pit (PLL pit) similarly to the case of FIG. 14A. However, the length of the information pit is basically selected to be the length of the period of the reference clock (position of the edge in this case is selected to be the reference position), and that length is changed in accordance with the recorded data. What is important as information is the shift amount of the edge from the reference position. Therefore, according to this embodiment, the length of the information pit is set to be more than one time and less than twice the period of the reference clock.

As is clear from the comparison of FIG. 14C with FIGS. 14A, 14B, according to this embodiment, the information recording of higher density becomes possible. Then, in order to determine the reference position more accurately, the position reference pit is inserted in addition to the clock pit, if necessary.

In the case of the compact disc, the track pitch is 1.6 µm, and the recording density is 0.6 µm per bit. On the other hand, according to this embodiment, the track pitch could be selected to be 1.2 µm, and the recording density could be selected to be 0.4 µm per bit. Therefore, there can be realized the recording density that is twice as high as that of the compact disc.

An embodiment of an apparatus that can realize the above-mentioned recording and reproducing will be described next. FIG. 15 shows an arrangement of a part of a recording apparatus. A data output circuit 15 A/D converts a signal supplied thereto from a circuit, not shown, processes the same in a predetermined fashion and outputs the signal thus processed to an error correction (ECC) circuit 52. The error correction circuit 52 effects the processing such as the addition of an error correction code, the interleaving or the like on the input digital data. A data length converting circuit 53 converts data of, for example, 8 bits input thereto from the error correction circuit 52 into data of 3 bits. The data of 3-beam unit is supplied to a recording apparatus shown in FIG. 16.

A reference clock (FIG. 17A) is supplied to a terminal 11 of FIG. 16. This reference clock is generated by a PLL circuit 31 of FIG. 18, which will be described later on, in synchronism with the clock pit of the optical disk. The reference clock is supplied through a buffer 12 and a switch 14 to a delay line 15. The switch 14 is changed in position to a contact a side on the odd-even number track and to a contact b side on the even-numbered track, respectively. When the switch is connected to the contact b side, the reference clock is inverted by an inverter 13 and then input to the delay line 15. The other end of the delay line 15 is grounded via a resistor 16.

The delay line 15 includes 8 output terminals each having a buffer 17 and outputs thereof have delay times which are different at the unit time each. More specifically, this unit time is set to a time corresponding to the length of 0.05 µm on the optical disk. That is to say, from each output terminal, there is output a reference clock that is delayed by a delay time of unit time x 0 time to unit time x 7 times. A data selector 10 selects any one of the 8 output terminals in response to the 3-bit data supplied thereto from the data length converting circuit 53. More specifically, the data selector selects an output terminal having a delay time of unit time x 0 (i.e., outputs a reference clock that is not delayed) when data is [0], and also selects an output terminal having a delay time of unit time x 5 when data is [5]. Therefore, the reference clock is delayed in a step-wise fashion in which the unit time is one step by a delay time corresponding to the digital data. When the position reference pit is recorded, [0] is input to the data selector 10 as data. Accordingly, the reference clock that is not delayed is output from the data selector 10.

A T-type flip-flop 18 is triggered at the leading edge of the output from the data selector 10. Each time the flip-flop is triggered, the logic level of its output is inverted. An output of this T-type flip-flop 18 is supplied to one input of an AND gate 20.

An N-scale counter 23 counts the reference clock. A decoder 24 counts a count value of this counter and generates a signal of a logic level L during the servo area interval of each sector and a signal of a logic level H (see FIG. 17B) of a data interval of each sector. This signal is supplied to a reset terminal of the T-type flip-flop 18 and the other input of the AND gate 20.

Therefore, in the data interval, the AND gate 20 is energized so that a recording pulse (FIG. 17C) whose leading and trailing edges are delayed in a step-wise fashion by a time corresponding to the 3-bit data output from the T-type flip-flop 18 is output through the AND gate 20. The signal output from the AND gate 20 is supplied to a recording head (not shown) for the optical disk as a recording signal and is thereby recorded on the optical disk. During the servo area interval, the AND gate 20 is de-energized to inhibit the recording signal from the T-type flip-flop 18 from being output.

A reproducing apparatus will be described with reference to FIG. 18. A reproduced RF signal played back from the optical disk is input to a PLL circuit 31 and an equalizer 34. The PLL circuit 31 extracts the component of the above-mentioned clock pit (PLL pit) from the RF signal (FIG. 3A) to generate the reference clock (FIG. 3C) which is then supplied to a sawtooth wave oscillator 33. The sawtooth wave oscillator 33 generates a sawtooth wave signal (FIG. 3D) in synchronism with the reference clock input thereto and outputs the same to A/D converters 36, 37. Further, the reference clock generated by the PLL circuit 31 is also supplied to a timing controller 32, and the timing controller 32 supplies a latch pulse at the timing of the above-mentioned position reference pit (FIG. 3A) to a latch circuit 40 in synchronism with the reference clock and also supplies a latch pulse at the timing of the trailing edge to a latch circuit 42.

The equalizer 34 processes the RF signal input thereto such that this signal has a predetermined frequency and phase characteristic. Then, the equalizer outputs the signal thus processed to a binary circuit 35. The binary circuit 35 converts the input RF signal into a binary signal. The binary RF signal (FIG. 3B) is supplied to a clock terminal of the A/D converter 36 and a clock terminal of a latch circuit 39. This signal is also inverted by an inverter 38 and then supplied to the clock terminal of the A/D converter 37 and to a clock terminal of a latch circuit 41.

Therefore, in the A/D converter 36, the level of the sawtooth wave signal (FIG. 3D) at the timing of the leading edge of the binary RF signal is sampled and then a sampled value thereof is A/D-converted. Because the level of the sawtooth wave signal is analyzed into 256 steps as described above, this sampled value is output to the latch circuit 39 and 40 as 8-bit data. The latch circuit 39 latches the output of the A/D converter 36 at the timing of the leading edge of the binary RF signal output from the binary circuit 35. Further, the latch circuit 40 latches the output of the A/D converter 36 at the timing of the leading edge of the position reference pit output from the timing controller 32.

As described above, data (reference position data) [64] of the leading edge of the position reference pit described in FIG. 5E or data (reference position data) [54] of the leading edge of the position reference pit described in FIG. 5I is latched in the latch circuit 40. Further, data (data displaced from the reference position) [82], [76], [70] of the leading edge of the information pit described in FIG. 5E or data (data displaced from the reference position) [72], [66], [60] of the leading edge of the information pit described in FIG. 5I is latched in the latch circuit 39. A subtracter 43 subtracts the latched data of the latch circuit 40 from the latched data of the latch circuit 39. The subtracter 43 subtracts the latched data of the latch circuit 40 from the latched data of the latch circuit 39, thereby producing values [18], [12], [6] indicative of the displacement of the leading edge of information pit described in FIG. 5F from the reference position or corrected values [18]. [12], [6] indicative of the displacement of the leading edge of information pit described in FIG. 5J from the reference position.

The 8-bit data output from the subtracter 43 is converted into 3-bit data by a conversion map circuit 45 and then output. If the output of the subtracter 43 is D/A-converted by a D/A converter circuit 47 and then monitored, then the characteristic shown in FIG. 7 (or FIG. 6) can be monitored as described above.

On the other hand, the level of the sawtooth wave signal at the timing of the trailing edge of the binary RF signal is sampled by the A/D converter 37, and its sampled value is A/D converted thereby. This sampled value is output to the latch circuits 41, 42 as 8-bit data. The latch circuit 41 latches the output of the A/D converter 37 at the timing of the trailing edge of the binary RF signal. Further, the latch circuit 42 latches the output of the A/D converter 37 at the timing of the trailing edge of the position reference pit output from the timing controller 32.

As described above, the data (reference position data) [64] of the trailing edge of the position reference pit described in FIG. 5E or data (reference position data) [74] of the trailing edge of the position reference pit described in FIG. 5I is latched in the latch circuit 42. Further, data (data shifted from the reference position) [64], [94], [64] of the trailing edge of the information pit described in FIG. 5E or data (data shifted from the reference position) [74], [104]. [74] of the trailing edge of the information pit described in FIG. 5I are latched in the latch circuit 41. The subtracter 44 subtracts the latched data of the latch circuit 42 from the latched data of the latch circuit 41, thereby obtaining values [0], [30], [0] indicative o the displacement of the trailing edge of the information pit described in FIG. 5F from the reference position or corrected values indicative of the displacement of the trailing edge of the information pit described in FIG. 5J from the reference position.

The 8-bit data output from the subtracter 44 is converted into 3-bit data by a conversion map circuit 46 and then output.

While the two A/D converters are used as described above, the present invention is not limited thereto and only one converter may be sufficient such that the signal from the binary circuit 35 or the inverter 38 is switched to and then supplied to the clock terminal thereof. Further, a sample and hold circuit may be used instead of the A/D converter. Furthermore, even when a count clock having a frequency sufficiently higher than the reference clock is generated at a predetermined period in synchronism with the reference clock, such count clock is counted by a counter and then latched at the timing of the leading edge or trailing edge of the binary RF signal, then the displacement of the edge can be detected.

While the data of the position reference pit at every sector is solely latched by the latch circuits 40 and 42 and used for correction, the present invention is not limited thereto and such a variant is also possible that an average value of values in a plurality of sectors is obtained and can be used for correction. If so, then a reliability can be increased more.

FIG. 19 shows a circuit arrangement such that, as shown in FIGS. 8 and 13, the odd-numbered track and the even-numbered track are judged in the optical disc having the format in which the wobbled pit is made common in the adjacent tracks and the phases of the position reference pit and the information pit are shifted by 90 degrees between the adjacent tracks and the polarity of the tracking servo is switched in response to the judged result. In this embodiment, a reproduced RF signal reproduced and output from the optical disc is supplied to a PLL circuit 61 and a sample and hold circuit 63. The PLL circuit 61 generates a reference clock from a component corresponding to the reference pit and outputs the same to a timing circuit 62. The timing circuit 62 generates a variety of timing signals synchronized with the reference clock supplied from the PLL circuit 62 and supplies the same to sample and hold circuits 63, 66 and 67.

As earlier noted with reference to FIG. 13, if the phase of the pit is shifted by 90 degrees, then the timing at which the last information pit (or position reference pit) becomes different at the odd-numbered track and the even-numbered track. The timing circuit 62 outputs the sampling pulse to the sample and hold circuit 63 at the timing in which the last information pit exists in the even-numbered track and in which the last information pit does not exist in the odd-numbered track (see FIG. 13). Since the information pit exists in the even-numbered track, the level of the RF signal at the timing in which the sampling pulse is input is small. On the other hand, since no information pit exists in the odd-numbered track, the level of the RF signal is larger than that of the case of the even-numbered track.

Accordingly, the level of the RF signal at the timing in which the sampling pulse is input is sampled and held in the sample and hold circuit 63 and this sampled and held value is compared with a reference voltage output from a reference voltage generating circuit 65 by a comparing circuit 64. This reference voltage is set to an intermediate value between the sampled and held value in the odd-numbered track and the sampled and held value of the even-numbered track. Therefore, in the case of the odd-numbered track, the output of the comparing circuit 64 goes to high level, while in the case of the even-numbered track, that output goes to low level. This output is used to change-over the switch shown in FIG. 16 and is also used to change-over a switch 68 of a tracking servo circuit 80.

The timing circuit 62 supplies the sampling pulse to the sample and hold circuit 66 at the timing of one wobbled pit shown in FIG. 13, and supplies the sampling pulse to the sample and hold circuit 67 at the timing of the other wobbled pit. Accordingly, the sample and hold circuits 66 and 67 sample and hold therein the levels of the RF signals at the timings of the two wobbled pits. A differential amplifier 69 subtracts the output of the sample and hold circuit 67 from the output of the sample and hold circuit 66 to generate a tracking error signal. This tracking error signal is supplied to a tracking actuator 70, thereby the tracking control being effected. An input terminal of the differential amplifier 69 to which the outputs of the sample and hold circuits 66, 70 are supplied is switched oppositely (opposite polarity side) by the switch 68 in the odd-numbered track and in the even-numbered track. Therefore, even when the wobbled pit is commonly used in the adjacent tracks, the correct tracking servo is executed.

According to the information recording apparatus of the above-mentioned embodiment, since the edge position of the information pit is shifted in a step-wise fashion in response to the recording information from the reference position to thereby record digital information, digital information can be recorded at higher density.

According to the information recording medium of the above-mentioned embodiment, since the information pit is formed such that the position of the edge is changed in a step-wise fashion in response to the recording information, it is possible to realize the information recording medium of higher recording density.

According to the information recording medium of the above-mentioned embodiment, since the phase of the information pit is shifted by 90 degrees in the adjacent tracks, it is possible to realize the information recording medium having a narrow track pitch and having less crosstalk.

According to the information reproducing apparatus of the above-mentioned embodiment, since the displacement of the edge of the information pitch from the reference position is detected, digital information that was recorded with high density can be reproduced accurately.

According to the information recording apparatus of the above-mentioned embodiment, since the position reference pit indicative of the reference position of the edge of the information pit is recorded, a velocity of the information recording medium can be controlled with ease upon recording.

According to the information recording medium of the above-mentioned embodiment, since the position reference pit indicative of the edge of the information pit is disposed on the information pits with the predetermined ratio, an influence of jitter upon reproduction can be made small and it is possible to realize the information recording medium from which information can be read out accurately.

According to the information reproducing apparatus of the above-mentioned embodiment, since the detection position of the edge of the information pit is corrected by the detection position of the edge of the reference pit, an influence of jitter can be made small and it becomes possible to read out information accurately.

According to the information recording medium of the above-mentioned embodiment, since the wobbled pit for tracking is arranged so as to be used commonly in the adjacent tracks, the track pitch can be made narrower.

According to the information recording and reproducing apparatus of the above-mentioned embodiment, since the polarity of the tracking by the wobbled pitch is switched on the odd-numbered track and the even-numbered track, the phase of the information pit is shifted by 90 degrees in the information recording apparatus of the above-mentioned embodiment which can effect the accurate tracking even when the track pitch is narrow, the track pitch can be made narrow and information can be recorded.

FIG. 20 shows a fundamental format of an optical disc to which there is applied an information recording medium according to other embodiment of the present invention. In this embodiment, a servo area is provided in each track at a constant period and a data area is formed between the servo area and the servo area. The servo area has 5 pits and the data area has 44 pits. Of 5 pits of the servo area, two pits are assigned to education pits P1, P2 and remaining 3 pits are assigned to reference pits P3 through P5. The edge on the left-hand side of the education pit P2 is set to a position M of any of 8 positions from 0 to 7. The edge of the right-hand side also is set to a position N of any of 8 shift positions from 0 to 7.

More specifically, as shown in FIG. 21, the left-hand side edge of the pit is set to any one of 8 shift positions of 0 to 7 in response to recording data an. Similarly, the position of the right-hand side edge is set to any one of 8 shift positions of 0 to 7 in response to recording data bn. A pitch of each shift position is set to Δ. As a result, the pit has the shortest length Lp when any of the recording data an and bn is formed at the edge of the shift position 0.

Positions M and N of the education pit P2 are set to different combinations in respective servo areas. More specifically, M and Na re set to, for example, (0, 0) in the first servo area and set to (0, 1) in the next servo area. Similarly, they will be set to (0, 2), (0, 3), ... (7, 6), (7, 7). That is, in 64 (= 8 x 8) servo areas, there are prepared all combinations of possible positions of the edges of the respective sides of the education pit P2.

In this case, the education pit 1 becomes dummy. More specifically, the education data can be formed on the edges of the respective ends of the pit P1 not on the edges of the respective ends of the pit P2 from a theory standpoint. However, if so, then the pit that adjoins the left-hand side of the pit P1 is a data pit of the data area so that the position of such edge is changed in response to the data. As a result, a degree at which the education pit P1 interferes with the edge of, particularly, the data area side is changed depending upon the value of data. Accordingly, it becomes difficult to form the education data as a pattern under a constant state as will be described later on. Therefore, it is preferable to form education data on the edges of the respective sides of the education pit P2 like the embodiment. With this arrangement, the reference pit P3 adjoining the right-hand side of the education pit P2 and the education pit P1 adjoining the left-hand side thereof have the edges thereof held constant (0, 0) so that, when education data of the education pit P2 is read out, such data is constantly affected by a constant intersymbol interference and hence a constant pattern can be obtained.

The reference pits P3 to P5 are pits that are used to obtain data of reference positions of (0, 0) and (7, 7). The reference position data can be formed at the edges of the respective ends of, for example, the pit P5 from a theory standpoint. If so, however, similarly to the case that the education pit has been described so far, the degree of the interference from the adjacent data area is changed depending on recording data. Therefore, it is preferable that the reference position data is not formed on the right-hand side edge of the reference pit P5 in the figure as in the embodiment.

FIG. 22 is a block diagram showing an arrangement of an embodiment of an optical disc reproducing apparatus to which the information reproducing apparatus according to this embodiment is applied. An optical disc 101 is rotated by a spindle motor 102. On this optical disc 101, there is recorded information on the basis of a principle shown in FIGS. 20 and 21. More specifically, digital information is recorded by shifting in a step-wise fashion at least one position of the front and rear edges of the information pit from a predetermined reference position. On this optical disc 101, there are formed the servo areas at a constant period and the education pits P1, P2 and the reference pits P3 to P5. It is needless to say that data pits are formed in the data areas.

A pickup 103 radiates the optical disc 101 with a laser light to reproduce a signal recorded on the optical disc 101 from a reflected light. A reproduced RF signal output from the pickup 103 is amplified by a head amplifier 104 and supplied to a focus tracking servo circuit 105, an APC circuit 106 and a PLL circuit 107. The focus tracking servo circuit 105 generates a focus error signal and a tracking error signal from a signal input thereto and executes the focusing control and the tracking control on an error signal. The APC circuit 106 effects the servo so that an intensity of the laser light radiated on the optical disc 101 becomes constant. Further, the PLL circuit 107 extracts a clock component from the input signal and outputs a clock component thus extracted to a spindle servo circuit 108. The spindle servo circuit 108 controls the spindle motor 102 in synchronism with this clock such that the optical disc 101 can be rotated at a constant angular velocity or linear velocity.

On the other hand, the RF signal output from the head amplifier 104 is input to an A/D converter circuit 109, in which it is A/D converted and then eliminated in bias component by a bias eliminating circuit 110. This signal is then supplied to a two-dimension decoder 111 and a controller (CPU) 115. The two-dimension decoder 111 decodes the signal supplied thereto from the bias eliminating circuit 110 and supplies its output to a 6-8 bit converting circuit 112. The 6-8 bit converting circuit 112 converts input 6-bit data into 8-bit data and supplies the same to an error correction circuit 113. The error correction circuit 113 corrects error of input data and supplies error-corrected data to a D/A converting circuit 114. The D/A converting circuit 114 converts input data into an analog signal and outputs the same to a circuit not shown.

The two-dimension decoder 111 is constructed as, for example, shown in FIG. 23. More specifically, data supplied from the bias eliminating circuit 110 is sequentially delayed by delay circuits 121 and 122. Data output from the delay circuit 121 of the first stage and data delayed by the delay circuit 122 of the succeeding stage are output to a RAM 123 as address data. The RAM 123 reads out data written in addresses corresponding to address data supplied thereto from the delay circuits 121 and 122 and outputs the same to the 6-8 converting circuit 112.

FIG. 24 shows more in detail examples of circuit arrangements of the bias eliminating circuit 110 and the two dimension decoder 111. More specifically, in this embodiment, data output from the A/D converter circuit 109 is supplied to the latch circuit 131 and 132 and also supplied to the latch circuits 141 and 143 that constitute the bias eliminating circuit 110 together with the subtracting circuits 142, 144. The subtracting circuit 142 subtracts the data latched in the latch circuit 141 from data latched in the latch circuit 131 and the subtracting circuit 144 subtracts data latched in the latch circuit 143 from data latched in the latch circuit 132. The two subtracting circuits output subtracted outputs, respectively.

Outputs of the subtracting circuits 142 and 144 are supplied to the RAM 123 as a high-order address and a low-order address. Further, the latch circuits 133 and 134 latch education data supplied thereto from the subtracting circuits 142 and 144 at predetermined timings and output education data thus latched to the CPU 115. The CPU 115 forms the education data as a pattern and effects a mapping on the RAM 123.

Operation of the above-mentioned embodiment will be described. Prior to this description, a principle of how to read the shift position of the information pit according to this embodiment will be described.

If now bits are distant from each other by a sufficient distance and an intersymbol interference from the adjacent bit is ignored, then output data of the A/D converter circuit 109 at the timings of the front and rear edges of n'th bit become Va(n) and Vb(n). Va(n) and Vb(n) indicate the levels of RF signal and can be expressed by the following equations:$\text{Va(n) = Δ x an + g(bn)}$$\text{Vb(n) = Δ x bn + g(an)}$ where g( ) is a nonlinear function that expresses an intersymbol interference between two edges. A value of this function is increased as a recording density is increased (i.e., as two edges come close). The decoding of data is to solve the above simultaneous equations to thereby obtain the recorded signals an, bn from the observed Va(n) and Vb(n).

The signals an, bn can be understood as a pattern recognition problem on the two-dimensional space. If the calculations of the above equations are carried out for all combinations of (an, bn) and resultant Va(n) and Vb(n) are plotted on the two-dimensional space as a value on the X axis and a value on the Y axis, then values that Va(n), Vb(n) can take are expressed as information points on FIG. 26. On this two-dimensional plane, the function g( ) that expresses the influence of the intersymbol interference is expressed as a position distortion of the information point. More specifically, if the function g( ) is 0 (when the intersymbol interference does not occur), the information point is located at the position (lattice point) (reference point) at which lines shown by broken lines in FIG. 26 cross each other. However, in actual practice, there are produced intersymbol interference functions g(an), g(bn) which become monotone increasing functions as, for example, shown in FIG. 27. Consequently, as shown in FIG. 26, information points shown by solid circles in the figure are displaced from the lattice points (reference points).

The above-mentioned displacement occurs due to the intersymbol interference so that this displacement is increased as the intersymbol interference is increased. FIG. 28 shows this state. More specifically, FIG. 28A shows a displacement (distortion) obtained when the linear recording density is set to 0.32 µm/bit and B and C in the same figure show distortions obtained when the linear recording density is set to 0.36 µm/bit and 0.46 µm/bit, respectively. It is to be understood that a distortion is increased as the line recording density is decreased (as the recording density is increased).

More specifically, education data recorded on the above-described education pit P2 is reproduced and the information pit defined by that reproducing level is mapped on the RAM 123 as a reference point as shown by the solid circles in FIG. 26. Then, the information pit that results from reading the data on the data pit is plotted on the RAM 123 and it is judged that the closest references point is a reference point corresponding to the information point. Then, the edge position (an, bn) indicated by this reference point is output as the edge position of the read out information point.

Mapping operation of the reference point on the RAM 123 will be described with reference to a timing chart of FIG. 29.

The optical pickup 109 reproduces the signal recorded on the optical disc 101. The reproduced RF signal is supplied through the head amplifier 140 to the A/D converter circuit 109 and thereby A/D-converted. Digital data output from the A/D converter circuit 109 is latched in the latch circuits 131, 132, 141 and 143, respectively. These latch circuits are supplied with a clock A (FIG. 29C), a clock B (FIG. 29D), a clock RA (FIG. 29E), and a clock RB (FIG. 29F), respectively.

The clock A, the clock B, the clock RA, the clock RB, a clock TA (FIG. 29C) and a clock TB (FIG. 29H) shown in FIG. 29 are clocks that are generated so as to have predetermined phase relationships relative to respective pits on the basis of the clock pit recorded on the optical disc 101. As will be clear from FIG. 29. the clock A and the clock B are respectively generated at the timings at which the front edge and the rear edge of each pit are sampled. Further, the clocks RA, RB are generated at the timing at which the reference position data (0, 0) of the reference pit P3 of respective servo areas are latched.

Accordingly, in the latch circuits 141 and 143, there are latched reference position data (0, 0) of the front edge and the rear edge of the reference pit P3 in the preceding servo area. When the latch circuits 131 and 132 latch the education data of the front edge and the rear edge of the education pit P2, the latched data of the latch circuit 141 is subtracted from the latched data of the latch circuit 131 by the subtracter 142. Similarly, the data latched in the latch circuit 143 is subtracted from the data latched in the latch circuit 132.

More specifically, the subtracter circuits 142 and 144 output a level difference at the position 0 with respective to the position M (M is any value of 0 to 7) of the education pit p2. Also, the subtracter circuit 144 outputs a level difference of the position N with respect to the position N (N is any value of 0 to 7). When the level at the position 0 is subtracted from the data as described above, a DC component (bias component) of the reproduced signal can be eliminated. Data whose DC component is eliminated are supplied to the latch circuits 133, and 134, respectively. The latch circuits 133, 134 latch these data at the timings at which the clocks TA and TB are input and supplied the same to the CPU 115. In other words, the latch circuits 133 and 134 latch the education data whose DC component is eliminated and output the same to the CPU 115.

Of course, absolute level of the data of each shift position can be latched without the subtraction of the value of the reference position data. However, if so, then the absolute level of each shift position is changed due to a fluctuation of the disc and the optical system, thus making it impossible to judge each shift position. Therefore, it is preferable to reduce the influence of the fluctuation of the disc and the optical system by subtracting the value of the reference position data (0, 0).

The CPU 115 maps the information points defined by the two coordinates on the RAM 123 as reference points under the condition that education data input from the latch circuit 133 is taken as the value of the abscissa direction in FIG. 26 and education data input from the latch circuit 134 is taken as the value of the ordinate direction in FIG. 26.

After the above-mentioned mapping operation had been effected on the education data from the 64 servo areas, then 64 reference points are mapped on predetermined storage points on the RAM 123 as shown in FIG. 30.

Then, the CPU 115 calculates distances of the respective storage points on the RAM 123 relative to the storage points in which 64 reference points are stored. More specifically, as, for example, shown in FIG. 31, distances of storage points m₁ to m₁₇ relative to a storage point mᵢ in which the reference point (0, 7) is stored are calculated. Similarly, distances of the storage points m₁ to m₁₇ relative to a storage point mⱼ at which a reference point (1, 7) is stored are also calculated. Then, of the storage points at which reference points are stored in the respective storage points, the same data as the reference point stored in the closest storage point is stored.

When the quantization bit number of, for example, the A/D converter circuit 109 per sample is 8-bit, then the output thereof has the levels of 256 stages. Accordingly, the RAM 123 has 256 addresses each as abscissa and ordinate addresses. In other words, the RAM 123 is formed of 256 x 256 storage points. Of these storage points, the reference points are stored in the predetermined storage points as shown in FIG. 30.

Then, distances of the storage points in which the reference points were already stored relative to other storage points in which these reference points are not stored are calculated and the same data as the reference points stored in the closest storage points are stored in the respective storage points. In the embodiment shown in FIG. 31, for example, of the storage points m₁ to m₁₇, the storage points m₁ to m₉ are closest to the storage point mᵢ (reference point (0, 7)) and the storage points m₁₀ to m₁₇ are closest to the storage points mⱼ (reference point (1, 7)). Therefore, data of the reference point (0, 7) is written in the storage points m₁ to m₉. In other words, these storage points are set to an area A (0, 7) of the reference point (0, 7). On the other hand, data of the reference point (1, 7) is written in the storage points m₁₀ to m₁₇. That is, these storage points are set to an area A (1, 7) corresponding to the reference point (1, 7).

Data of reference points are written in 256 x 256 storage points as described above so that areas on the RAM 123 corresponding to the respective reference points are presented as shown in FIG. 32. Data at reference points (i, j) are stored in storage points includes in respective areas A (i, j).

Operation in the data areas will be described with reference to a timing chart of FIG. 33. An RF signal shown in FIG. 33B is input to the A/D converter circuit 109 in response to pit trains shown in FIG. 33A. The level of the front edge of each pit is sampled in synchronism with a clock A (FIG. 33C) and the level of the rear edge is sampled by a clock B (FIG. 33D). As shown in FIGS. 33A and 33B, the phase of the RF signal is changed in accordance with the position of the edge position of the pit. Because the clocks A and B are generated during the edge is shifted, the shift position of the edge can be detected as the change of the level of the RF signal.

Data indicative of the front edge of the data pit latched by the latch circuit 131 is supplied to the RAM 123 as its high-order address (address in the abscissa in FIG. 26) after a difference relative to the level of the position 0 latched in the latch circuit 141 was calculated by the subtracting circuit 142. Similarly, the data indicative of the rear edge of the data pit latched by the latch circuit 132 is supplied to the RAM 123 as its low-order address (address on the ordinate in FIG. 26) after the level of the position 0 latched in the latch circuit 143 was subtracted to eliminate the DC component. The RAM 123 reads out and outputs data stored at its address defined by the abscissa and the ordinate. The reference points of the education data formed by the mapping are written as such data. Accordingly, the data (an, bn) of the reference point that is closest to the information point is selected and then output.

The 6-bit data (an, bn) output from the two-dimensional decoder 111 is supplied to and converted into 8-bit data by the 6-8 bit converting circuit 112. More specifically, when an audio signal, for example, is recorded on the optical disc 101, the audio signal is corrected in error at the unit of 8 bits. However, as described above, according to this embodiment, data is recorded at the fundamental unit of 6 bits in total of 3 bits (8 shift positions) of the front edge and 3 bits (8 shift positions) of the rear edge. More specifically, upon recording, the 8-bit data is converted into the 6-bit data according to the predetermined system and data is recorded on the optical disc 101. Therefore, the 6-8 bit converting circuit 112 converts the 6-bit data into the original 8-bit data conversely. Data of the 8-bit unit inversely converted by the 6-8 bit converting circuit 112 is supplied to the error correction circuit 113, in which it is corrected in error. Then, the data thus error-corrected is fed to the D/A converting circuit 114, in which it is D/A converted and then supplied to a speaker, not shown, or the like, from which it is emanated.

FIG. 36 shows error rates of data thus obtained by the decoding. As illustrated, it is to be appreciated that as compared with the conventional decoding method using the sawtooth wave, the error rate can be reduced when the two-dimension decoding is carried out by using the reference points mapped on the RAM 123.

While the front edge and the rear edge of one pit are paired in which data an and bn are respectively recorded as shown in FIG. 21 as described above, the data an and bn can be recorded in respective opposing edges of the adjacent pits as, for example, shown in FIG. 34. Also in this case, with respect to education data and position reference data in the servo area, education data and reference position data are respectively recorded in the opposing edges of two pits as shown in FIG. 35. In this embodiment, education data (M, N) is recorded in the respective opposing edges of the education pits P1 and P2 and position reference data (0, 0) is recorded in the respective opposing edges of the reference pits P3 and P4. Then, position reference data (7, 7) is recorded in the respective opposing edges of the reference pits P4 and P5.

In this case, as shown in FIGS. 33E and 33F, the clocks A and B are generated at the rear edge and the front edge of the pit, respectively.

A distance between the information point obtained from reproduced data and the reference point obtained from the education data is not stored in the RAM 123 in advance and may be calculated every time. However, if so, then the rapid judgement becomes difficult. Therefore, it is preferable to write such distance in the RAM 123 in advance like the embodiment.

While the bias eliminating circuit 110 is interposed between the A/D converter circuit 109 and the two-dimension decoder 111 in the embodiment shown in FIG. 22, it is possible to insert a gain adjusting circuit in addition to the bias eliminating circuit. FIG. 37 shows an embodiment of this case. More specifically, according to this embodiment, an output from a subtracting circuit 142 is supplied a gain variable amplifier 163 and also supplied to a latch circuit 163, in which it is latched by a clock KA. An output from the latch circuit 161 is supplied to a subtracting circuit 162 which calculates a difference between it and a predetermined target amplitude. An output of the subtracting circuit 162 is supplied to the gain variable amplifier 163.

Similarly, an output of a subtracting circuit 144 is supplied to a gain variable amplifier 166 and also supplied to a latch circuit 164. Data that was latched by the latch circuit 164 at the timing of a clock KB is supplied to a subtracting circuit 165, in which a target amplitude supplied from a circuit not shown is subtracted from it and then supplied to the gain variable amplifier 166.

Incidentally, the gain variable amplifiers 163, 166 may be formed of a ROM. Outputs of the subtracting circuits 142, 162 (144 and 165) are input to this ROM as addresses and data corresponding to the addresses are read out therefrom.

The output of the gain variable amplifier 163 is supplied to the RAM 123 and a latch circuit 133, and the output of the gain variable amplifier 166 is supplied to the RAM 123 and the latch circuit 134. More specifically, a gain adjusting circuit 160 is connected to the rear stage of the bias eliminating circuit 110. A rest of arrangements is similar to those of FIGS. 22 and 24.

The embodiment of FIG. 37 will be described with reference to a timing chart of FIG. 38. In the embodiment of FIG. 38, education data are disposed on the respective edges of the education pits P1 and P2 unlike the embodiments shown in FIGS. 20 and 29. Further, the reference position data (0, 0) is recorded in the opposing edges of the reference pits P3 and P4 and the reference position data (7, 7) is recorded in the opposing edges of the reference pits P3 and P4 (FIG. 38A).

An RF signal shown in FIG. 38B is obtained in accordance with the education pits P1, P2 and the reference pits P3 to P5. This signal is A/D-converted by the A/D converter circuit 109 at the timing of a clock shown in FIG. 38C. This data is latched by the latch circuit 131 at the timing of a clock A (FIG. 38D) and also latched by the latch circuit 132 at the timing of a clock B (FIG. 38E). This data is further latched by the latch circuit 141 at the timing of a clock RA (FIG. 38A) and also latched by the latch circuit 143 at the timing of a clock RB (FIG. 38G).

The output of the latch circuit is subtracted from the output of the latch circuit 131 by the subtracting circuit 142, and the output of the latch circuit 143 is subtracted from the output of the latch circuit 132 by the subtracting circuit 144. As described above, data that can be prevented from being affected by the DC component can be obtained (the reference point (0, 0) can be disposed at the position of the lattice point at which broken straight lines cross each other in FIG. 30) similarly as described above.

In this embodiment, further, the latch circuit 161 latches the output of the subtracting circuit 142 at the timing of the clock KA (FIG. 38H). In other words, the latch circuit 161 latches therein the position reference data [7] recorded in the rear edge of the reference pit P4. A predetermined target amplitude is subtracted from the output of the latch circuit 161 by the subtracting circuit 162 and a resultant difference is supplied to the gain variable amplifier 163. The gain variable amplifier 163 adjusts the gain of the signal supplied thereto from the subtracting circuit 142 in response to the signal supplied from the subtracting circuit 162. Therefore, the position at which the signal output from the gain variable amplifier 163 is disposed in the abscissa direction as shown by the reference point (7, 7) is set to be a target amplitude in FIG. 26.

Similarly, the latch circuit 164 latches the output of the subtracting circuit 144 at the timing of a clock KB (FIG. 38I). More specifically, the latch circuit 164 latches the position reference data [7] that is recorded on the front edge of the reference pit P6. The data latched by the latch circuit 164 is subtracted from the target amplitude by the subtracting circuit 165 and then supplied to the gain variable amplifier 166. The gain variable amplifier 166 adjusts the gain of the signal supplied thereto from the subtracting circuit 144 in response to the signal supplied thereto from the subtracting circuit 165. Therefore, the position at which the signal output from the gain variable amplifier 166 is disposed in the ordinate direction as shown by the reference point (7, 7) can be adjusted so as to set to a pre-determined target amplitude position.

As described above, the gain is adjusted by the gain adjusting circuit 160, whereby the position of the reference point (7, 7) shown in FIG. 30 can be set to the predetermined position (the position of the lattice point at which the broken straight lines cross each other in FIG. 30). Thus, even when the video disc 101 has a location fluctuation of characteristic, data can be read out therefrom accurately.

FIG. 39 shows an output of the gain variable amplifier 163 (or 166). FIG. 39A shows the output obtained when the output of the subtracting circuit 162 is not supplied to the gain variable amplifier 163, and FIG. 39B shows the output obtained when the output is supplied thereto. It is to be understood that, when the gain is adjusted by the output of the subtracting circuit 162, the fluctuation of the level can be suppressed more.

FIG. 40 shows measured results of the number of C1 errors obtained when an error correction method used in the compact disc is applied in the embodiment of FIG. 37. In the figure, open circles show measured results when the outputs of the subtracting circuits 162, 165 are not supplied to the gain variable amplifiers 163, 166. In the figure, solid circles show measured results obtained when the outputs of the latch circuits 141, 143 are supplied to the subtracting circuits 142, 144 and also the outputs of the subtracting circuits 162, 165 are supplied to the gain variable amplifiers 163, 166. It is to be understood that the latter could reduce the number of errors generated. Further, it is to be appreciated that the ratio of errors satisfy the CD standard.

As described above, reproduced data is processed on the basis of the data recorded in the education pits P1, P2 or the reference pits P3 to P5 so that, if a dropout, for example, occurs in these reference data, then data cannot be read out accurately substantially. In order to prevent such disadvantage, a circuit arrangement can be made as, for example, shown in FIG. 41. More specifically, in this embodiment, the latch circuits 131. 132 in FIG. 37 are replaced with FIFOs 171, 172 and the latch circuits 141, 143 are replaced with defect eliminating circuits 173, 174. Further, the latch circuits 161, 164 are replaced with defect eliminating circuits 182, 184, and FIFOs 181, 183 are inserted into the preceding stages of the gain variable amplifiers 163, 166. A rest of the arrangements is similar to that of FIG. 37.

More specifically, the defect eliminating circuit 173 stores 4 blocks of, for example, data input thereto from the A/D converting circuit 109 as shown in FIG. 42. Position reference data (0, 0) of respective blocks are compared and an average value of two data except maximum and minimum data is calculated and used as data of the position reference data (0, 0). With the above-mentioned arrangement, even when the value of the position reference data (0, 0) becomes an abnormal value due to a dropout or the like, such abnormal value can be prevented from being used as the reference data.

This is also true for other defect eliminating circuits 174, 182, 184.

Incidentally, because data of 4 blocks must be stored in the defect eliminating circuits 173, 174, 182, 186, the FIFOs 171, 172, 181, 183 are adapted to delay data by the delay time based on such data and supply the delayed data to the subtracting circuits 142, 144 or the gain variable amplifiers 163, 166.

FIG. 43 shows an example of an arrangement of the defect eliminating circuit 173 (defect eliminating circuits 174, 182, 184 are arranged similarly). In this embodiment, data input from the A/D converter circuit 109 is sequentially latched in the latch circuits 191 to 194 in synchronism with the clock RA. Data thus latched in the latch circuits 191 to 194 are read out to a data bus when gates 195 to 198 are turned on. The data on the data bus are latched in latch circuits 199 to 202 at a predetermined timing in synchronism with a clock output from a controller 204.

Data latched in the latch circuits 199 and 200 are supplied to a comparing circuit 203, in which levels of these are compared with each other. Then, a signal SAB corresponding to the compared result is supplied to a controller 204. The controller 204 outputs gate control signals EA, EB, EC, ED to the gates 195 to 198, respectively, to read predetermined data to the data bus. and also generates clocks that are output to the latch circuits 199 to 202. Also, the controller judges maximum value and minimum value of data latched in the latch circuits 191 to 194 from the signal supplied thereto from the comparing circuit 203 on the basis of a table shown in FIG. 44.

More specifically, the controller 204 outputs a predetermined one of the gate control signals EA to ED at a predetermined timing and predetermined two data of the data latched in the latch circuits 191 to 194 are respectively latched in the latch circuits 199 and 200 via the data bus. The magnitude of the data thus latched is judged by the comparing circuit 203. By repeating this processing over and over, the maximum value and the minimum value of the data latched in the latch circuits 191 to 194 are calculated.

In FIG. 44, of latched data Rₙ₋₁ to Rₙ₊₂, when the left-hand side data on the uppermost row is larger than the right-hand data, such left-hand data is represented by logic level [1]. When it is smaller, such left-hand data is represented by logic level [0]. When it is indefinite, such left-hand data is represented by X. For example, when the data Rₙ₋₁, latched in the latch circuit 194 is larger than data Rₙ latched in the latch circuit 193, data Rₙ₋₁ latched in the latch circuit 194 is larger than the data Rₙ₊₁ latched in the latch circuit 194 and further the data Rₙ₋₁ latched in the latch circuit 194 is larger than data Rₙ₊₂ latched in the latch circuit 191, the data Rₙ₋₁ latched in the latch circuit 194 becomes the maximum value.

Further, when data Rₙ₋₁ is smaller than data Rₙ, the data Rₙ is larger than data Rₙ₊₁ and the data Rₙ is larger than the data Rₙ₊₂, data Rₙ becomes the maximum value.

Similarly, maximum values and minimum values will be obtained from FIG. 44.

When the controller 204 detects the maximum value and the minimum value of the data Rₙ₋₁ to Rₙ₊₂ stored in the latch circuits 191 to 194 from the table shown in FIG. 44 as described above, the controller reads out other data than the above data to the data bus. These data are latched in the latch circuits 201 and 202. Then, the data latched in the latch circuits 201 and 202 are added by an adding circuit 205, multiplied with a coefficient 1/2 by a multiplying circuit 206 and supplied to and latched in a latch circuit 207. That is to say, the latch circuit 207 latches therein the average value of the two data of data Rₙ₋₁ to Rₙ₊₂ latched in the latch circuits 191 to 194 except the maximum value and the minimum value. This data is supplied to the subtracting circuit 142.

FIG. 45A shows measured results of the change of level obtained when the defect eliminating circuits 173, 174, 182, 184 are used (shown by A in the figure) in FIG. 41 and when the defect eliminating circuits are not used (shown by B in the figure). When the defect eliminating circuits are not used, it is to be appreciated that the level is fluctuated in response to a defect caused by a dropout or the like. On the other hand, when the defect circuits are used, it is to be appreciated that the defect is eliminated and the fluctuation of the level is suppressed. In other words, it becomes possible to judge data more accurately.

In addition, a minimum distance between the information point obtained by the reproduced data and the reference point set by the education data can be detected by a circuit arrangement shown in FIG. 46, for example.

In this embodiment, a reproduced RF signal is A/D-converted by an A/D converter circuit 150 and then latched by latch circuits 151 and 152. The latch circuit 151 latches therein data corresponding to the front edge of the pit, for example, and the latch circuit 152 latches therein data corresponding to the rear edge thereof. The data thus latched by the latch circuits 151 and 152 are supplied to 64 correlators 153-1 to 153-64. The correlators 153-1 to 153-64 are supplied with 64 education data, respectively. Each of the correlators 153-1 to 153-64 calculates a correlation between data and education data supplied from the latch circuits 151, 152 and outputs a calculated result to a maximum value detector 154. The maximum value detector 154 is formed of, for example, a winner take all circuit and detects and outputs the maximum data of 64 data supplied thereto from the correlators 153-1 to 153-64.

While all reference points are mapped on the RAM 123 in response to the education data as described above, only the reference points of a part thereof (e.g., 16 reference points) may be mapped by the education data and other reference points may be interpolated by the calculation from the reference points mapped by the education data.

According to the information reproducing apparatus of the above-mentioned embodiment, since the position of the edge of the information pit is judged from the level of the edge shift period of the reproduced signal from the information recording medium, the arrangement thereof can be simplified and the apparatus can be produced inexpensively.

According to the information reproducing apparatus of the above-mentioned embodiment, since the edge position is judged from the information point defined by the level of the signal reproduced from the information recording medium provided when one edge and the other edge of the adjacent edges are located at the predetermined positions, the intersymbol interference can be suppressed and the recording density can be increased.

According to the information reproducing apparatus of the above-mentioned embodiment, since the reference points are mapped on the memory, the position of the edge can be judged with ease and promptly.

According to the information reproducing apparatus of the above-mentioned embodiment, since the reference points are mapped from the education pit recorded on the information recording medium, data can be read out accurately without being affected by the fluctuation of the information recording medium.

According to the information reproducing apparatus of the above-mentioned embodiment, since a part of the reference points is obtained by the calculation from the reference points defined by the education pit, the number of education pits recorded on the information recording medium can be reduced so that the capacity of the information recording medium can be utilized more effectively.

According to the information reproducing apparatus of the above-mentioned embodiment, since a predetermined one is selected from a plurality of reproduced education pits is selected as the education pit used for the mapping, data can be reproduced without being affected even by the defect in the education pit.

According to the information reproducing apparatus of the above-mentioned embodiment, since the reference points are stored in the storage points defined by the address corresponding to the reproducing level of the education pit, it becomes possible to judge the reference point corresponding to the information point with ease.

According to the information reproducing apparatus of the above-mentioned embodiment, since, of storage points that are defined by the address corresponding to the reproducing level of the education pit, the reference point stored in the closest storage point is stored at the storage point other than the storage points defined by the address corresponding to the reproducing level of the education pit, it becomes possible to judge the corresponding reference point promptly.

Further, according to the information reproducing apparatus of the above-mentioned embodiment, since the memory is formed of the RAM, the apparatus can be simplified in arrangement.

According to the information reproducing apparatus of the above-mentioned embodiment, since the signal corresponding to the reference pit located at the shift position in which the shift amount of the edge is smallest is subtracted from the signal reproduced from the information recording medium, data can be read out accurately without being affected by the fluctuation of the information recording medium or the like.

According to the information reproducing apparatus of the above-mentioned embodiment, since the signal corresponding to the reference pit located at the shift position in which the shift amount of the edge is largest is subtracted from the signal reproduced from the information recording medium, data can be read out accurately without being affected by the local fluctuation of the characteristic of the information recording medium itself.

According to the information reproducing apparatus of the above-mentioned embodiment, since the signal corresponding to the reference pit located between the shift position in which the shift amount of the edge is smallest and the shift position in which the shift amount of the edge is largest is subtracted from the signal reproduced from the information recording medium, data can be read out accurately regardless of respective fluctuations of individual information recording media and the local fluctuation of the inside.

According to the information recording medium of the above-mentioned embodiment, since the education pits are formed, recorded data can be reproduced accurately without being affected by the fluctuations of the characteristics of the information recording medium and the reproducing apparatus.

According to the information recording medium of the above-mentioned embodiment, since the education data is formed apart from the data pit, the amount that the education data is affected by the recorded data can be reduced.

According to the information recording medium of the above-mentioned embodiment, since the reference pit having the edge at the shift position in which the shift amount is smallest is recorded at a predetermined position other than data pits, it is possible to realize the information recording medium from which data can be read out accurately even when individual information recording media have fluctuations.

According to the information recording medium of the above-mentioned embodiment, since the reference pit having the edge at the shift position in which the shift amount is largest is recorded at the predetermined position other than the data pits, it is possible to realize the information recording medium from which data can be read out accurately even when the information recording medium has a local fluctuation of the characteristic.

According to the information recording medium of the above-mentioned embodiment, since the reference pit having the edge of the shift position in which the shift amount is smallest and the edge of the shift position in which the shift amount is largest is recorded at the predetermined position other than the data pits, it is possible to realize the information recording medium from which data can be read out accurately regardless of individual fluctuations and local fluctuation.

## Claims

1. An information recording medium comprising:
an information pit being formed such that an edge position thereof is changed in response to recording information, **characterized in that**
a position reference pit is formed relative to a plurality of said information pits with a predetermined ratio and whose edge position indicates a reference position of an edge of said information pit.

2. The information recording medium according to claim 1, in which digital information is recorded such that a position of a front or rear edge of an information pit is shifted from a predetermined reference position in a step-wise fashion, said information recording medium comprising an education pit having education data for generating a reference point that is used to judge an information point defined by the level of a signal reproduced from said information recording medium provided when one edge and the other edge of adjacent edges are located at predetermined positions.

3. The information recording medium according to claim 2, wherein when said education pit is formed at a position in which at least one other pit is interposed from a data pit in which original data is recorded or when said education pit is formed at a position adjacent to said data pit, said education pit is formed at an edge opposite to an edge opposing to said data pit.

4. The information recording medium according to claim 2 or 3, wherein a reference pit having said two edges located at a shift position in which a shift amount is smallest is recorded at a predetermined position other than said data pit.

5. The information recording medium according to claim 2 or 3, wherein a reference pit having said two edges located at a shift position in which a shift amount is largest is recorded at a predetermined position other than said data pit.

6. The information recording medium according to claim 2 or 3, wherein a reference pit having said two edges located at a shift position in which a shift amount is smallest and a reference pit having said two edges located at a shift position in which a shift amount is largest are recorded at predetermined positions other than said data pit.

7. An information recording apparatus for recording digital information by forming an information pit on an information recording medium, said information recording apparatus comprising means for recording digital information such that a position of a leading or trailing edge of said information pit is shifted in a step-wise fashion from a predetermined position in response to recording information, and further comprising means for recording an information pit on an information recording medium such that an edge position thereof is changed in response to recording information; and
means for recording a position reference pit being formed relative to a plurality of said information pit with a predetermined ratio and whose edge position indicates a reference position of an edge of said information pit.

8. The information recording medium according to claim 7, wherein said information recording medium is rotated at a constant angular velocity and phases of said information pits are shifted by 90 degrees each in adjacent tracks.

9. An information reproducing apparatus for reproducing an information recording medium having an information pit being formed such that an edge position thereof is changed in response to recording information and a position reference pit being formed relative to a plurality of said information pit with a predetermined ratio and whose edge position indicates a reference position of an edge of said information pit, said information reproducing apparatus comprising reference edge detecting means for a reference position of an edge of an information pit from a signal reproduced from an information recording medium having an information pit whose edge position is changed in a step-wise fashion from a predetermined reference position in response to digital information; and
edge detecting means for detecting a displacement of the edge of said information pit from the reference position,
and further comprising reference edge detecting means for detecting a position of an edge of said position reference pit;
information edge detecting means for detecting a position of an edge of said information pit; and
correcting means for ccorrecting the position of the edge of said information pit detected by said information edge detecting means by a position of an edge of said reference pit detected by said reference edge detecting means.

10. The information reproducing apparatus according to claim 9, wherein a signal corresponding to a reference pit located at a shift position in which shift amounts of said two edges are smallest is subtracted from a signal reproduced from said information recording medium.

11. The information reproducing apparatus according to claim 9, wherein a signal corresponding to a reference pit located at a shift position in which a shift amount of said edge is largest is subtracted from a signal reproduced from said information recording medium.

12. The information reproducing apparatus according to claim 9, wherein a signal corresponding to a reference pit located at a shift position in which a shift amount of said edge is smallest and at a shift position in which a shift amount of said edge is largest is subtracted from a signal reproduced from said information recording medium.

## Patentansprüche

1. Informationsaufzeichnungsmedium
mit einem Informations-Pit, daß so ausgebildet ist, daß eine seiner Kantenpositionen nach Maßgabe der Aufzeichnungsinformation verändert ist,
**dadurch gekennzeichnet,**
daß ein Positionsreferenz-Pit ausgebildet ist, das sich in einem vorbestimmten Verhältnis auf mehrere der genannten Informations-Pits bezieht und dessen Kantenposition eine Referenzposition einer Kante des Informations-Pits kennzeichnet.

2. Informationsaufzeichnungsmedium nach Anspruch 1, auf dem digitale Information in der Weise aufgezeichnet ist, daß die Position der Vorder- oder Hinterkante eines Informations-Pits gegenüber einer vorbestimmten Referenzposition in Stufen verschoben ist, wobei das Informationsaufzeichnungsmedium ein Trainings-Pit mit Trainingsdaten zur Erzeugung eines Referenzpunkts aufweist, der zur Beurteilung eines Informationspunkts benutzt wird, der durch den Pegel eines von dem Informationsaufzeichnungsmedium reproduzierten Signals definiert ist, das dann geliefert wird, wenn eine Kante und die andere Kante von benachbarten Kanten an vorbestimmten Positionen liegen.

3. Informationsaufzeichnungsmedium nach Anspruch 2, bei dem dann, wenn das Trainings-Pit an einer Position ausgebildet ist, an der wenigstens ein anderes Pit von einem Daten-Pit zwischengefügt ist, in dem originale Daten aufgezeichnet sind, oder wenn das Trainings-Pit an einer dem Daten-Pit benachbarten Position ausgebildet ist, das Trainings-Pit an einer Kante ausgebildet wird, die der dem Daten-Pit gegenüberliegenden Kante entgegengesetzt ist.

4. Informationsaufzeichnungsmedium nach Anspruch 2 oder 3, bei dem ein Referenz-Pit, dessen zwei Kanten an einer Verschiebungsposition liegen, an der der Verschiebungsbetrag am kleinsten ist, an einer vorbestimmten anderen Position aufgezeichnet wird als das Daten-Pit.

5. Informationsaufzeichnungsmedium nach Anspruch 2 oder 3, bei dem ein Referenz-Pit, dessen zwei Kanten an einer Verschiebungsposition liegen, an der der Verschiebungsbetrag am größten ist, an einer vorbestimmten anderen Position aufgezeichnet wird als das Daten-Pit.

6. Informationsaufzeichnungsmedium nach Anspruch 2 oder 3, bei dem ein Referenz-Pit, dessen zwei Kanten an einer Verschiebungsposition liegen, an der der Verschiebungsbetrag am kleinsten ist, und ein Referenz-Pit, dessen zwei Kanten an einer Verschiebungsposition liegen, an der der Verschiebungsbetrag am größten ist, an einer vorbestimmten anderen Position aufgezeichnet werden als das Daten-Pit.

7. Informationsaufzeichnungsgerät zum Aufzeichnung von digitaler Information durch Ausbilden eines Informations-Pits auf einem Informationsaufzeichnungsmedium, wobei das Informationsaufzeichnungsgerät aufweist:
Mittel zum Aufzeichnen der digitalen Information in der Weise, daß die Position der Vorder- oder Hinterkante des genannten Informations-Pits gegenüber einer vorbestimmten Referenzposition nach Maßgabe der Aufzeichnungsinformation in Stufen verschoben wird,
Mittel zum Aufzeichnen eines Informations-Pits auf dem Informationsaufzeichnungsmedium in der Weise, daß die Position einer seiner Kanten nach Maßgabe der Aufzeichnungsinformation verändert ist,
und Mittel zum Aufzeichnen eines Positionsreferenz-Pits, das sich in einem vorbestimmten Verhältnis auf mehrere der genannten Informations-Pits bezieht und dessen Kantenposition eine Referenzposition einer Kante des Informations-Pits kennzeichnet.

8. Informationsaufzeichnungsgerät nach Anspruch 7, bei dem das Informationsaufzeichnungsmedium mit konstanter Winkelgeschwindigkeit gedreht wird und die Phasen der Informations-Pits in den jeweils nebeneinander liegenden Spuren um 90° verschoben sind.

9. Informationswiedergabegerät zur Wiedergabe eines Informationsaufzeichnungsmediums mit einem Informations-Pit, daß so ausgebildet ist, daß die Position einer seiner Kanten nach Maßgabe der Aufzeichnungsinformation verändert ist, und einem Positionsreferenz-Pit, das sich in einem vorbestimmten Verhältnis auf mehrere der genannten Informations-Pits bezieht und dessen Kantenposition eine Referenzposition einer Kante des Informations-Pits kennzeichnet,
wobei das Informationswiedergabegerät aufweist:
eine Referenzkanten-Detektoreinrichtung zur Detektierung der Referenzposition einer Kante eines Informations-Pits aus einem Signal, das von dem Informationsaufzeichnungsmedium reproduziert wird, das ein Informations-Pit aufweist, dessen Kantenposition gegenüber einer vorbestimmten Referenzposition nach Maßgabe der digitalen Information in Stufen geändert ist, und
eine Kanten-Detektoreinrichtung zur Detektierung einer Verschiebung der Kante des Informations-Pits gegenüber der Referenzposition,
ferner eine Referenzkanten-Detektoreinrichtung zum Detektieren der Position einer Kante des Positionsreferenz-Pits,
eine Informationskanten-Detektoreinrichtung zum Detektieren der Position einer Kante des Informations-Pits und
eine Korrektureinrichtung zum Korrigieren der von der Informationskanten-Detektoreinrichtung detektierten Position der Kante des Informations-Pits durch die Position einer von der Referenzkanten-Detektoreinrichtung detektierten Kante des Referenz-Pits.

10. Informationswiedergabegerät nach Anspruch 9, bei dem ein Signal, das einem Referenz-Pit entspricht, das sich an einer Verschiebungsposition befindet, in der der Verschiebungsbetrag der genannte Kanten am kleinsten ist, von einem von dem Informationsaufzeichnungsmedium reproduzierten Signal subtrahiert wird.

11. Informationswiedergabegerät nach Anspruch 9, bei dem ein Signal, das einem Referenz-Pit entspricht, welches sich an einer Verschiebungsposition befindet, in der der Verschiebungsbetrag der genannten Kante am größten ist, von einem von dem Informationsaufzeichnungsmedium reproduzierten Signal subtrahiert wird.

12. Informationswiedergabegerät nach Anspruch 9, bei dem ein Signal, das einem Referenz-Pit entspricht, das sich an einer Verschiebungsposition befindet, in der der Verschiebungsbetrag der genannten Kante am kleinsten ist, und an einer Verschiebungsposition, in der der Verschiebungsbetrag der genannten Kante am größten ist, von einem von dem Informationsaufzeichnungsmedium reproduzierten Signal subtrahiert wird.

## Revendications

1. Support d'enregistrement d'information comprenant :
une piqûre d'information qui est formée de telle sorte que sa position de bord soit modifiée en réponse à une information d'enregistrement,
caractérisé en ce que :
une piqûre de référence de position est formée en relation avec une pluralité desdites piqûres d'information selon un rapport prédéterminé et une position de bord afférente indique une position de référence d'un bord de ladite piqûre d'information.

2. Support d'enregistrement d'information selon la revendication 1, dans lequel une information numérique est enregistrée de telle sorte qu'une position d'un bord avant ou arrière d'une piqûre d'information soit décalée par rapport à une position de référence prédéterminée par pas, ledit support d'enregistrement d'information comprenant une piqûre d'éducation comportant des données d'éducation pour générer un point de référence qui est utilisé pour apprécier un point d'information défini par le niveau d'un signal reproduit à partir dudit support d'enregistrement d'information produit lorsqu'un bord et l'autre bord de bords adjacents sont situés en des positions prédéterminées.

3. Support d'enregistrement d'information selon la revendication 2, dans lequel, lorsque ladite piqûre d'éducation est formée en une position à laquelle au moins une autre piqûre est interposée par rapport à une piqûre de données dans laquelle des données originales sont enregistrées ou lorsque ladite piqûre d'éducation est formée en une position adjacente à ladite piqûre de données, ladite piqûre d'éducation est formée au niveau d'un bord opposé à un bord opposé à ladite piqûre de données.

4. Support d'enregistrement d'information selon la revendication 2 ou 3, dans lequel une piqûre de référence comportant lesdits deux bords situés au niveau d'une position de décalage à laquelle une valeur de décalage est la plus faible est enregistrée en une position prédéterminée autre que ladite piqûre de données.

5. Support d'enregistrement d'information selon la revendication 2 ou 3, dans lequel une piqûre de référence comportant lesdits deux bords situés au niveau d'une position de décalage à laquelle une valeur de décalage est la plus importante est enregistrée en une position prédéterminée autre que ladite piqûre de données.

6. Support d'enregistrement d'information selon la revendication 2 ou 3, dans lequel une piqûre de référence comportant lesdits deux bords situés en une position de décalage à laquelle une valeur de décalage est la plus petite et une piqûre de référence comportant lesdits deux bords situés en une position de décalage à laquelle une valeur de décalage est la plus importante sont enregistrées en des positions prédéterminées autres que ladite piqûre de données.

7. Appareil d'enregistrement d'information permettant d'enregistrer une information numérique en formant une piqûre d'information sur un support d'enregistrement d'information,
ledit appareil d'enregistrement d'information comprenant
un moyen pour enregistrer une information numérique de telle sorte qu'une position d'un front avant ou arrière de ladite piqûre d'information soit décalée par pas par rapport à une position prédéterminée en réponse à un enregistrement d'une information et comprenant en outre un moyen pour enregistrer une piqûre d'information sur un support d'enregistrement d'information de telle sorte que sa position de bord soit modifiée en réponse à l'enregistrement d'une information ; et
un moyen pour enregistrer une piqûre de référence de position étant formé en relation avec une pluralité desdites piqûres d'information selon un rapport prédéterminé, une position de bord afférente indiquant une position de référence d'un bord de ladite piqûre d'information.

8. Support d'enregistrement d'information selon la revendication 7, dans lequel ledit support d'enregistrement d'information est tourné à vitesse angulaire constante et des phases desdites piqûres d'information sont décalées de 90 degrés dans chacune des pistes adjacentes.

9. Appareil de reproduction d'information permettant de reproduire un support d'enregistrement d'information comportant une piqûre d'information qui est formée de telle sorte que sa position de bord soit modifiée en réponse à l'enregistrement d'une information et une piqûre de référence de position qui est formée en relation avec une pluralité desdites piqûres d'information selon un rapport prédéterminé, une position de bord afférente indiquant une position de référence d'un bord de ladite piqûre d'information, ledit appareil de reproduction d'information comprenant :
un moyen de détection de bord de référence pour une positon de référence d'un bord d'une piqûre d'information à partir d'un signal reproduit à partir d'un support d'enregistrement d'information présentant une piqûre d'information dont une position de bord est modifiée par pas par rapport à une position de référence prédéterminée en réponse à une information numérique ; et
un moyen de détection de bord pour détecter un déplacement du bord de ladite piqûre d'information par rapport à la position de référence ;
et comprenant en outre :
un moyen de détection de bord de référence pour détecter une position d'un bord de ladite piqûre de référence de position ;
un moyen de détection de bord d'information pour détecter une position d'un bord de ladite piqûre d'information ; et
un moyen de correction pour corriger la position du bord de ladite piqûre d'information détecté par ledit moyen de détection de bord d'information au moyen d'une position d'un bord de ladite piqûre de référence détecté par ledit moyen de détection de bord de référence.

10. Appareil de reproduction d'information selon la revendication 9, dans lequel un signal correspondant à une piqûre de référence située au niveau d'une position de décalage à laquelle des valeurs de décalage desdits deux bords sont les plus petites est soustrait d'un signal reproduit à partir dudit support d'enregistrement d'information.

11. Appareil de reproduction d'information selon la revendication 9, dans lequel un signal correspondant à une piqûre de référence située au niveau d'une position de décalage à laquelle une valeur de décalage dudit bord est la plus importante est soustrait d'un signal reproduit à partir dudit support d'enregistrement d'information.

12. Appareil de reproduction d'information selon la revendication 9, dans lequel un signal correspondant à une piqûre de référence située en une position de décalage à laquelle une valeur de décalage dudit bord est la plus petite et en une position de décalage à laquelle une valeur de décalage dudit bord est la plus importante est soustrait d'un signal reproduit à partir dudit support d'enregistrement d'information.
